# EUROPEAN PATENT SPECIFICATION

(11) **EP 4 151 346 B1**
(45) Date of publication and mention of the grant of the patent: **10.07.2024**
(21) Application number: 21315163.2
(22) Date of filing: 17.09.2021
(51) Int. Cl.: B23C 5/06, B23C 5/20

(54) **FACE MILLING CUTTER AND METHOD FOR MACHINING A SURFACE ON A WORKPIECE BY MEANS OF SUCH A FACE MILLING CUTTER**
STIRNFRÄSER UND VERFAHREN ZUM BEARBEITEN EINER OBERFLÄCHE AN EINEM WERKSTÜCK MITTELS EINES SOLCHEN STIRNFRÄSERS
FRAISE À SURFACER ET PROCÉDÉ D'USINAGE D'UNE SURFACE SUR UNE PIÈCE À USINER AU MOYEN D'UNE TELLE FRAISE À SURFACER

(43) Date of publication of application: 22.03.2023
(73) Proprietor: AB Sandvik Coromant, 811 81 Sandviken (SE)
(72) Inventor: Lemoine, Vincent, 37390 Notre Dame D'Oé (FR); David, Emmanuel, 81161 Sandviken (SE); André, Philippe, 41120 Les Montils (FR)
(74) Representative: Sandvik

(56) References cited:
- WO-A1-2019/034199
- US-A- 4 993 891
- US-A1- 2019 118 272

## Description

### FIELD OF THE INVENTION AND PRIOR ART

The present invention relates to a face milling cutter according to the preamble of claim 1. The invention also relates to a method for machining a surface on a workpiece by means of such a face milling cutter.

A face milling cutter is a rotating cutting tool used for performing face milling operations on a workpiece. In a face milling operation, a flat surface is cut perpendicular to the longitudinal axis of the tool body of the face milling cutter. A face milling cutter may be provided with several cutting inserts mounted in a respective insert seat in the tool body of the face milling cutter.

In some types of structures, such as engine blocks, mating surfaces of different parts may be brought into abutment against each other and joined to each other with a sealing agent, for instance in the form a sealing paste, interposed between the mating surfaces in order to properly seal the structure in question. In order to ensure that the sealing agent is maintained in a stable manner between the mating surfaces, the mating surfaces should have a suitable surface roughness. A common requirement is that the mating surfaces should have a mesh pattern with a surface roughness Ra in the order of 1.2-2.5. There may also be specific requirements with respect to other surface properties of the mating surfaces, such as for instance a specified maximum roughness depth Rmax. Normally, each mating surface is first formed as a smooth flat surface on a workpiece by means of a face milling cutter of ordinary type, whereupon the smooth surface is machined is a suitable manner in order to achieve the prescribed surface pattern and surface roughness. However, another alternative is to form a desired surface pattern with a prescribed surface roughness on a workpiece surface directly in a face milling operation by means of a face milling cutter equipped with a specific pattern forming insert. A face milling cutter equipped with such a pattern forming insert is previously known from US 2019/0118272 A1. In the face milling cutter disclosed in US 2019/0118272 A1, the pattern forming insert has a cutting edge with an axially projecting tip portion that is configured to form a groove in a smooth flat workpiece surface formed by cutting edges of other ordinary cutting inserts of the face milling cutter. In this case, the surface roughness is adjusted by adjustment of the axial position of the pattern forming insert in relation to the axial position of the other cutting inserts.

### OBJECT OF THE INVENTION

The object of the present invention is to provide a face milling cutter of the above-mentioned type that has a new and favourable design.

### SUMMARY OF THE INVENTION

According to the invention, said object is achieved by means of a face milling cutter having the features defined in claim 1.

The face milling cutter according to the invention comprises:
- a tool body having a front end and an opposite rear end, the rear end being configured for attachment to a machine, wherein a longitudinal axis of the tool body extends between the rear end and the front end of the tool body;
- at least two primary cutting inserts for forming a milled flat surface on a workpiece;
- a pattern forming insert for forming a grooved pattern in the milled flat surface formed by the primary cutting inserts; and
- several insert seats provided in the tool body and distributed in the circumferential direction of the tool body, wherein these insert seats comprise:
   - at least two first insert seats configured to accommodate a respective one of said at least two primary cutting inserts, and furthermore
   - a second insert seat configured to accommodate the pattern forming insert,

   wherein each primary cutting insert of the at least two primary cutting inserts has a cutting edge that constitutes the axially foremost cutting edge of the primary cutting insert, as seen in a reference direction from the rear end of the tool body towards the front end of the tool body in parallel with the longitudinal axis of the tool body, and
   wherein the pattern forming insert has a rake face, a relief surface and a pattern forming cutting edge formed at an intersection between the rake face and the relief surface, wherein the pattern forming cutting edge constitutes the axially foremost cutting edge of the pattern forming insert as seen in said reference direction and is located axially forwardly of the axially foremost cutting edge of each primary cutting insert as seen in said reference direction. The axially foremost cutting edge of each one of the primary cutting inserts and the axially foremost cutting edge of the pattern forming insert are all located axially forwardly of the front end of the tool body as seen in said reference direction. The several insert seats provided in the tool body are at least four in number.

According to the invention, at least a surface portion of the relief surface of the pattern forming insert that adjoins to the rake face of the pattern forming insert is wave-shaped with a periodic wave shape formed by a plurality of mutually parallel ridges and intermediate valleys extending away from the rake face such that the pattern forming cutting edge is wave-shaped as seen in a direction towards the rake face with a periodic wave shape comprising a plurality of wave crests and a wave trough between every two consecutive wave crests of the plurality of wave crests, wherein the height of each wave crest of the plurality of wave crests is smaller than the linear distance between every two consecutive wave crests of the plurality of wave crests, and wherein each such wave trough is located axially forwardly of the axially foremost cutting edge of each primary cutting insert as seen in the above-mentioned reference direction. Thus, during each revolution of the tool body about its axis of rotation, the pattern forming cutting edge will form several grooves in the milled flat surface formed by the primary cutting inserts, wherein these grooves extend side by side in parallel curves and have a profile corresponding to the wave-shaped profile of the pattern forming cutting edge. By feeding the tool body forwards along the workpiece surface with a suitable feed per revolution of the tool body in a direction perpendicular to the longitudinal axis of the tool body, curved grooves formed by the pattern forming cutting edge in the milled flat surface during each new revolution of the tool body will intersect curved grooves formed by the pattern forming cutting edge during previous revolutions of the tool body, and a mesh pattern is thereby formed in the milled workpiece surface as the tool body is moved along the workpiece surface. Owing to the fact that several grooves are simultaneously formed by the pattern forming cutting edge during each revolution of the tool body, the feed per revolution of the tool body along the workpiece surface may be increased as compared to the face milling cutter disclosed in US 2019/0118272 A1, where one single groove is formed during each revolution of the tool body. Furthermore, the face milling cutter according to the invention gives a larger possibility to vary and adjust a feed per tooth compared to the face milling cutter disclosed in US 2019/0118272 A1 and also to create different surface properties with the same tool set-up. Thanks to that, the face milling cutter according to the invention is also more versatile compared to the face milling cutter disclosed in US 2019/0118272 A1.

As mentioned above, the height of each wave crest of the plurality of wave crests is smaller than the linear distance between every two consecutive wave crests of the plurality of wave crests. Thanks to this, fragments of workpiece material have less tendency to get pasted on the pattern forming cutting edge, which results in a cleaner cut, better quality of the machined surface, and also in a better tool life of the pattern forming insert.

The face milling cutter of the present invention further comprises a calibrating insert for cutting summits in the grooved pattern formed by the pattern forming cutting edge in the milled workpiece surface to thereby adjust the surface roughness of the workpiece surface machined by the face milling cutter. In addition to the first insert seats for the primary cutting inserts and the second insert seat for the pattern forming insert, the tool body is also provided with a third insert seat configured to accommodate the calibrating insert, wherein this third insert seat is arranged in the tool body directly before or directly after the second insert seat as seen in the intended direction of rotation of the tool body. The calibrating insert has a calibrating cutting edge that is located axially between the plurality of wave crests and each wave trough of the pattern forming cutting edge as seen in the above-mentioned reference direction, which implies that the calibrating cutting edge will cut the summits between the grooves formed by the pattern forming cutting edge in the milled workpiece surface. The final surface roughness of the workpiece surface machined by the face milling cutter will consequently depend on the axial position of the calibrating cutting edge in relation to the pattern forming cutting edge.

By having the third insert seat arranged in the tool body directly before or directly after the second insert seat as seen in the intended direction of rotation of the tool body, the pattern forming insert and the calibrating insert are located adjacent to each other as seen in the circumferential direction of the tool body. Thanks to this, it is possible to decrease influences of the inclination of the axis of the tool body, which occurs due to cutting forces bending the tool body, on the quality of the machined surface. Improved surface quality and improved tool life is obtained when the calibrating insert is located directly after the pattern forming insert, because the calibrating cutting edge then only cuts the summits between the grooves already formed in the workpiece surface by the pattern forming insert.

The calibrating cutting edge is arranged axially forwardly of the front end of the tool body as seen in the above-mentioned reference direction.

The several insert seats, i.e. the at least two first insert seats, the second insert seat and the third insert seat, preferably have same geometry, which means they are preferably of the same kind, such that a primary cutting insert of the at least two primary cutting inserts may be mounted in any of the several insert seats. Furthermore, the pattern forming insert may preferably be arranged such that it has its abutment faces, which are arrange to abut the support faces when mounted in the second insert seat, equivalent to abutment faces of the at least two primary cutting inserts such that the pattern forming insert may be mounted in any of the several insert seats. Furthermore, the calibrating insert is preferably of the same kind, which means it has same geometry, as the at least two primary cutting inserts such that the calibrating insert may be mounted in any of the several insert seats. The calibrating insert is preferably but not necessarily of the same grade as the at least two primary cutting inserts. Each of the at least two primary cutting inserts is of the same kind, which means it has same geometry, and it is of the same grade, as the other ones of the at least two primary cutting inserts.

According to an embodiment of the invention, the wave-shaped surface portion of the relief surface has the same or substantially same profile when seen in different mutually parallel sections perpendicular to a longitudinal direction of the plurality of ridges on the wave-shaped surface portion of the relief surface. Hereby, the wave-shaped profile of the pattern forming cutting edge will remain unchanged when the rake face of the pattern forming cutting insert is subjected to surface grinding, and it will consequently be possible to regrind the rake face in order to resharpen the pattern forming cutting edge when it has been worn out, without changing the wave-shaped profile of the pattern forming cutting edge. By such regrinding of the rake face, a new sharp pattern forming cutting edge with the same profile as the worn out cutting edge may be formed on the pattern forming cutting insert, whereupon this new pattern forming cutting edge may be arranged in the correct position on the tool body by adjustment of the position of the pattern forming cutting insert, for instance by mounting suitable shims in the second insert seat or by means of a suitable adjustment mechanism associated with the second insert seat. The second insert seat may for instance be arranged in a cassette, which is mounted in the tool body and configured to support the pattern forming cutting insert. In this case, said adjustment mechanism may be configured to adjust the position of the cassette in the tool body, wherein the position of the pattern forming cutting insert, and thereby the position of the pattern forming cutting edge, is adjustable by adjustment of the position of the cassette in the tool body. As an alternative, the second insert seat may be formed directly in the tool body, wherein said adjustment mechanism is configured to adjust the position of the pattern forming cutting insert, and thereby the position of the pattern forming cutting edge, in the tool body by acting directly on the pattern forming cutting insert. Furthermore, each of the at least two primary cutting inserts and/or the calibrating insert may also be subject to regrinding of the rake face when they have been worn out. Preferably, a grinding measure by which the at least two primary cutting inserts and/or the calibrating insert are reground is equal to a grinding measure by which the pattern forming cutting insert is reground. In this way, there would be no need for correcting position of the new pattern forming cutting edge on the tool body.

According to another embodiment of the invention, the face milling cutter comprises means for adjustment of the position of the calibrating insert in the axial direction of the tool body in relation to the pattern forming insert. Hereby, the machine operator may adjust the axial position of the calibrating cutting edge in relation to the pattern forming cutting edge in dependence on the desired surface roughness of the workpiece surface to be milled, which implies that the surface roughness of the workpiece surface to be machined by the face milling cutter may be adjusted in a simple manner in dependence on the prevailing requirements. The third insert seat may for instance be arranged in a cassette, which is mounted in the tool body and configured to support the calibrating insert. In this case, said adjustment means may be configured to adjust the position of the cassette in the tool body, wherein the position of the calibrating insert in the axial direction of the tool body is adjustable by adjustment of the position of the cassette in the tool body. As an alternative, the third insert seat may be formed directly in the tool body, wherein said adjustment means is configured to adjust the position of the calibrating insert in the axial direction of the tool body by acting directly on the calibrating insert.

The above-mentioned ridges on the relief surface, and consequently the corresponding wave crests on the pattern forming cutting edge, are preferably three or more in number.

The rake angle of the pattern forming insert is preferably positive along the pattern forming cutting edge, which implies that the relief surface extends at an acute angle to the rake face. A positive rake angle of the pattern forming insert will result in reduced burr formation in the milled workpiece surface and in reduced wear on the pattern forming cutting edge. A pattern forming insert with a neutral or negative rake angle would create more compressive stress in the surface of the created grooves, as compared to a pattern forming insert with a positive rake angle. When the pattern forming cutting edge, during a revolution of the tool body, cuts new grooves in the milled workpiece surface across the grooves formed by the pattern forming cutting edge during one or more previous revolutions of the tool body, and a mesh pattern is created, the compressive stress previously created in the surface of the grooves will contribute to a more rapid development of wear on the pattern forming cutting edge and the calibrating cutting edge.

According to another embodiment of the invention, the length of the calibrating cutting edge is at least 1.5 or at least 2 or at least 2.5 or at least 3 times larger than the length of the pattern forming cutting edge.

According to another embodiment of the invention, each of the wave crests on the pattern forming cutting edge are jointly located in a first plane that extends perpendicularly to the longitudinal axis of the tool body, which implies that the plurality of grooves formed by the pattern forming cutting edge in the milled flat workpiece surface during each revolution of the tool body will all have the same depth. In a corresponding manner, the wave troughs on the pattern forming cutting edge are preferably jointly located in a second plane that extends perpendicularly to the longitudinal axis of the tool body.

According to another embodiment of the invention, each part of the pattern forming cutting edge between two consecutive wave crests converges continuously all the way towards the wave trough between the two consecutive wave crests when moving in a direction opposite to the reference direction. Thin burrs are formed in the mesh patterned workpiece surface when the pattern forming cutting edge during a revolution of the tool body cuts new grooves in the milled workpiece surface across grooves formed by the pattern forming cutting edge during one or more previous revolutions of the tool body. Burrs are also formed in the mesh patterned workpiece surface when the calibrating cutting edge cuts the summits between the grooves formed by the pattern forming cutting edge in the milled workpiece surface. The burr formation is reduced when the pattern forming cutting edge is so designed that each part of the pattern forming cutting edge between two consecutive wave crests converges continuously all the way towards the wave trough between the two consecutive wave crests when moving in a direction opposite to the above-mentioned reference direction.

Each one of the above-mentioned ridges and valleys on the relief surface preferably has a substantially arc-shaped profile with a radius of curvature as seen in a section perpendicular to a longitudinal direction of the ridges and valleys. Ridges and valleys of such shape are easy to form on the relief surface and the manufacturing of the pattern forming insert is consequently facilitated when the ridges and valleys on the relief surface have a shape like this. Said radius of curvature is preferably smaller than or equal to the linear distance between every two consecutive wave crests of the plurality of wave crests.

The pattern forming cutting edge preferably has a sinusoidal wave shape. In this case, the above-mentioned ridges and valleys on the relief surface have a corresponding sinusoidal wave shaped profile as seen in a section perpendicular to the longitudinal direction of the ridges and valleys. However, the pattern forming cutting edge may as an alternative have an essentially triangular wave shape or an essentially square wave shape, where in both cases the sharp ridges and valleys are preferably rounded-off such that the pattern forming cutting edge does not have any sharp corners.

According to another embodiment of the invention, the height of each wave crest is 0.005-0.020 mm, preferably 0.010-0.020 mm, and more preferably 0,010-0.015 mm, when seen in a plane perpendicular to the longitudinal direction of the ridges on the relief surface. The wave crest height here refers to the vertical distance between a wave crest and an adjacent wave trough as seen in a plane perpendicular to the longitudinal direction of the ridges on the relief surface. With a wave crest height within these ranges, it will be possible to achieve a suitable surface roughness of the milled workpiece surface. The height of each wave crest is preferably smaller than half the linear distance between every two consecutive wave crests, i.e. h<l/2 where h is the wave crest height and I is the linear distance between every two consecutive wave crests. Furthermore, the the linear distance I between every two consecutive wave crests is preferably 0.10-0.30 mm, and more preferably 0.15-0.25 mm.

According to another embodiment of the invention, the primary cutting inserts are staggered axially as well as radially, which implies that the primary cutting inserts, as seen in the intended direction of rotation of the tool body starting from the one of the primary cutting insert that is located closest after the pattern forming insert in the direction of rotation, are arranged at successively decreasing radial distances from the axis of rotation of the tool body and at successively increasing axial distances from a reference plane that extends perpendicular to the longitudinal axis of the tool body at the rear end thereof. Hereby, it will be possible to achieve uniform cutting depths and a uniform wear of the different primary cutting inserts as the rotating face milling cutter is moved along the workpiece surface, at the same time as the tool may be used at a larger depth of cut. Furthermore, it is surprisingly observed that machining results are better when the primary cutting inserts are staggered axially and radially.

According to another embodiment of the invention, the pattern forming insert is reground by surface grinding of the rake face to create a new pattern forming cutting edge with the same profile as the pattern forming cutting edge.

Further advantageous features of the face milling cutter according to the present invention will appear from the description following below.

The invention also relates to a method for machining a surface on a workpiece by means of a face milling cutter according to the invention, in which method a relative movement between the face milling cutter and the workpiece is effected such that the face milling cutter is made to move along the workpiece surface with a feed per revolution fₙ of the tool body in a feeding direction perpendicular to the longitudinal axis of the tool body that is smaller than the length of the pattern forming cutting edge, wherein the area on the workpiece surface machined by the pattern forming cutting edge during each new revolution of the tool body partly overlaps an area on the workpiece surface machined by the pattern forming cutting edge during the immediately preceding revolution of the tool body, as seen in the feeding direction. The method is preferably such that some of the wave crests on the pattern forming cutting edge during each new revolution of the tool body are moved in a curved path between a respective pair of adjacent curved grooves formed by the pattern forming cutting edge in the workpiece surface during one or more previous revolutions of the tool body. It is hereby possible to form a grooved pattern in the workpiece surface where the distance between the centre lines of every two consecutive grooves in the workpiece surface, as seen in the feeding direction, is smaller than the linear distance between every two consecutive wave crests on the pattern forming cutting edge.

The above-mentioned relative movement between the face milling cutter and the workpiece may be achieved by keeping the workpiece in a fixed position and moving the face milling cutter in relation to the workpiece, or by keeping the face milling cutter in a fixed position and moving the workpiece in relation to the face milling cutter. As a further alternative, the relative movement between the face milling cutter and the workpiece may be achieved by simultaneously moving the workpiece and the face milling cutter in relation to each other.

The workpiece surface, machined by the face milling cutter is always a flat surface.

The face milling cutter is preferably moved along the workpiece surface with a feed per revolution fₙ of the tool body in said feeding direction so chosen:
- that fₙ=n₁·l and fₙ<L, where n₁ is an integer, I is the linear distance between every two consecutive wave crests of the plurality of wave crests and L is the length of the pattern forming cutting edge; or
- that fₙ is a non-integer of the linear distance I between every two consecutive wave crests of the plurality of wave crests and 0.5·L<fₙ<L, preferably 0.55·L<fₙ<0.95·L, more preferably 0.6·L<fₙ<0.9·L; or
- that fₙ=l·(n₂+0.5), where n₂ is an integer larger than or equal to 0 and smaller that x-1, where x is the number of the plurality of wave crests.

Further advantageous features of the method according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a perspective view of a face milling cutter according to an embodiment of the present invention,
- Fig 2: is a partly exploded perspective view of the face milling cutter of Fig 1,
- Fig 3: is a planar view of the face milling cutter of Fig 1,
- Fig 4: is a lateral view of the face milling cutter of Fig 1,
- Fig 5: is a partly cut lateral view of the face milling cutter of Fig 1,
- Fig 6: is a detail enlargement of a section of Fig 5,
- Fig 7a: is a perspective view of a primary cutting insert included in the face milling cutter of Fig 1,
- Fig 7b: is a planar view of the primary cutting insert of Fig 7a,
- Fig 7c: is a lateral view of the primary cutting insert of Fig 7a,
- Fig 7d: is a front view of the primary cutting insert of Fig 7a,
- Fig 8a: is a perspective view of a calibrating insert included in the face milling cutter of Fig 1,
- Fig 8b: is a planar view of the calibrating insert of Fig 8a,
- Fig 8c: is a lateral view of the calibrating insert of Fig 8a,
- Fig 8d: is a front view of the calibrating insert of Fig 8a,
- Fig 9a: is a perspective view of a pattern forming insert included in the face milling cutter of Fig 1,
- Fig 9b: is a planar view of the pattern forming insert of Fig 9a,
- Fig 9c: is a lateral view of the pattern forming insert of Fig 9a,
- Fig 9d: is a perspective view in larger scale of the pattern forming insert of Fig 9a,
- Fig 10: is a detail enlargement of a section of Fig 9d,
- Fig 11: is a front view of the pattern forming insert of Fig 9a,
- Fig 12: is a detail enlargement of a section of Fig 11,
- Fig 13a: is a schematic illustration of a pattern forming cutting edge and a calibrating cutting edge, and a schematic cut through a part of a workpiece,
- Fig 13b: is a schematic illustration of a pattern forming cutting edge and a calibrating cutting edge, and a schematic cut through a part of a workpiece,
- Fig 13c: is a schematic illustration of different positions of a pattern forming cutting edge during three consecutive revolutions of a face milling cutter according to the invention, with a feed per revolution of the tool body according to a first alternative,
- Fig 13d: is a schematic illustration of different positions of a pattern forming cutting edge during three consecutive revolutions of a face milling cutter according to the invention, with a feed per revolution of the tool body according to a second alternative,
- Fig 13e: is a schematic illustration of different positions of a pattern forming cutting edge during three consecutive revolutions of a face milling cutter according to the invention, with a feed per revolution of the tool body according to a third alternative, and
- Fig 14: is a schematic illustration of a mesh pattern formed in a workpiece surface by means of a face milling cutter according to the invention.

### DETAILED DESCRIPTION OF EMBODIMENTS OF THE INVENTION

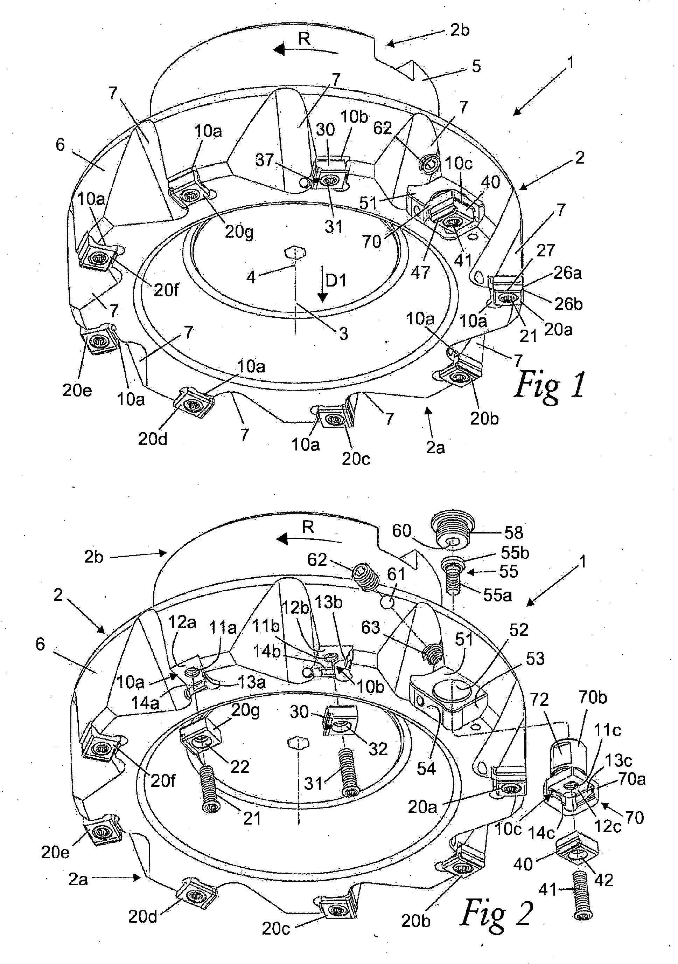

A face milling cutter 1 according to an embodiment of the present invention is illustrated in Figs 1-5. The face milling cutter 1 comprises a tool body 2 and is configured to be rotated about an axis of rotation 3. The tool body 2 has a front end 2a and an opposite rear end 2b. A longitudinal axis 4 of the tool body 2 extends between the rear end 2b and the front end 2a of the tool body, wherein this longitudinal axis 4 coincides with the axis of rotation 3 of the face milling cutter 1. A rear part of the tool body 2 forms a connection member 5, through which the tool body 2 is mountable, directly or via an intermediate tool holder, to a rotating spindle or the similar of a machine, for instance a milling machine or a drilling machine. A front part of the tool body 2 is provided with several insert seats 10a, 10b, 10c, which are angularly distributed in the circumferential direction of the tool body 2 and configured to receive a respective insert 20a-20g, 30, 40. In the illustrated embodiment, the insert seats 10a, 10b, 10c are evenly or at least substantially evenly distributed in the circumferential direction of the tool body 2. Thus, in this case the insert seats 10a, 10b, 10c are evenly or at least substantially evenly distributed about the longitudinal axis 4 of the tool body 2 in angular direction.

Ordinarily, face milling cutters have the cutting inserts arranged with regular spacing, which implies that the insert seats are evenly or substantially evenly distributed in the above-mentioned manner. However, a face milling cutter may as an alternative have an uneven/irregular distribution of the insert seats, a so-called differential pitch. Differential pitch refers to the irregular angular distance between the insert seats of a milling cutter. The latter design results in a cut down of vibrations and reduced noise between the machine, the tool and the workpiece.

Each insert seat 10, 10b, 10c is located at a transition between the front end 2a and the periphery 6 of the tool body 2, wherein each insert seat 10, 10b, 10c is open towards the front end 2a of the tool body 2 in order to allow a cutting insert 20a-20g, 30, 40 mounted in the insert seat to project in the axial direction of the tool body 2 beyond the front end 2a thereof. A chip pocket 7 is provided in the tool body 2 in front of each insert seat 10a, 10b, 10c as seen in the intended direction of rotation R of the tool body 2.

The insert seats 10a, 10b, 10c provided in the tool body 2 comprise:
- two or more first insert seats 10a configured to accommodate and support a respective cutting insert that constitutes a primary cutting insert 20a-20g of the face milling cutter 1;
- one second insert seat 10b configured to accommodate and support a cutting insert that constitutes a pattern forming insert 30 of the face milling cutter 1; and
- one third insert seat 10c configured to accommodate and support a cutting insert that constitutes a calibrating insert 40 of the face milling cutter 1.

The first insert seats 10a, and consequently the primary cutting inserts 20a-20g, are arranged consecutively in a curved row along the periphery of the tool body 2. In the illustrated embodiment, the third insert seat 10c is arranged in the tool body 2 directly after the second insert seat 10b as seen in the intended direction of rotation R of the tool body, which implies that the calibrating insert 40 is arranged in the tool body 2 adjacent to and directly after the pattern forming insert 30 as seen in the intended direction of rotation R of the tool body. In this case, a leading primary cutting insert 20a in the curved row of primary cutting inserts is arranged directly after the calibrating insert 40 as seen in the intended direction of rotation R of the tool body, and a trailing primary cutting insert 20g in the curved row of primary cutting inserts is arranged directly before the pattern forming insert 30 as seen in the intended direction of rotation R of the tool body.

As an alternative, the third insert seat 10c may be arranged in the tool body 2 directly before the second insert seat 10b as seen in the intended direction of rotation R of the tool body, which implies that the calibrating insert 40 is located adjacent to and directly before the pattern forming insert 30 as seen in the intended direction of rotation R of the tool body. In this case, a leading primary cutting insert 20a in the curved row of primary cutting inserts is arranged directly after the pattern forming insert 30 as seen in the intended direction of rotation R of the tool body, and a trailing primary cutting insert 20g in the curved row of primary cutting inserts is arranged directly before the calibrating insert 40 as seen in the intended direction of rotation R of the tool body.

In the embodiment illustrated in Figs 1-5, the tool body 2 is provided with seven first insert seats 10a spaced apart in the circumferential direction of the tool body. However, the tool body 2 may as an alternative, inter alia depending on the diameter of the tool body, be provided with any other suitable number of first insert seats 10a, as long as they are more than two in number. A smaller diameter tool body may for instance be provided with two first insert seats 10a, whereas a larger diameter tool body may be provided with more than seven first insert seats 10a. It is evident that the number of primary cutting inserts 20a-20g on the face milling cutter 1 corresponds to the number of first insert seats 10a.

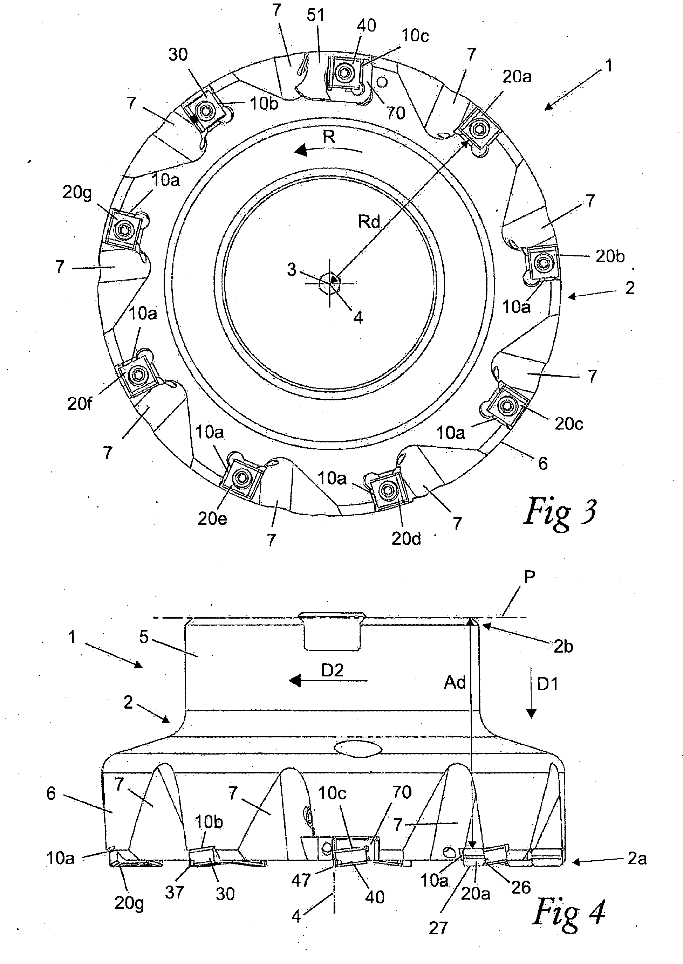

In the illustrated embodiment, the primary cutting inserts 20a-20g are staggered axially as well as radially such that the primary cutting inserts, as seen in the intended direction of rotation R of the tool body 2 and starting from the above-mentioned leading primary cutting insert 20a, are arranged at successively decreasing radial distances Rd (see Fig 3) from the axis of rotation 3 and at successively increasing axial distances Ad (see Fig 4) from a reference plane P that extends perpendicular to the longitudinal axis 4 of the tool body 2 at the rear end 2b thereof. Thus, the leading primary cutting insert 20a is the one of the primary cutting inserts that is located at the longest radial distance Rd from the axis of rotation 3 and at the shortest axial distances Ad from said reference plane P, whereas the above-mentioned trailing primary cutting insert 20g is the one of the primary cutting inserts that is located at the shortest radial distance Rd from the axis of rotation 3 and at the longest axial distances Ad from the reference plane P. This type of staggered arrangement of a number of consecutive cutting edges is described in closer detail in US 2004/0258488 A1. The primary cutting inserts 20a-20g and their respective cutting edges may also be arranged in the tool body as described in EP 3 321 017 A1. However, all primary cutting inserts 20a-20g may as an alternative be arranged at one and the same radial distance Rd from the axis of rotation 3 and at one and the same axial distances Ad from said reference plane P, i.e. arranged in the tool body 2 without being staggered axially or radially.

In the illustrated embodiment, each primary cutting insert 20a-20g is detachably mounted in its associated first insert seat 10a in a fixed position as seen in the axial direction of the tool body 2. Thus, the position of each primary cutting insert 20a-20g in the axial direction of the tool body 2 is not adjustable. In a corresponding manner, the pattern forming insert 30 is detachably mounted in the second insert seat 10b in a fixed position as seen in the axial direction of the tool body 2.

The calibrating insert 40 is detachably .mounted in the third insert seat 10c. The face milling cutter 1 is with advantage provided with means 50 for adjustment of the position of the calibrating insert 40 in the axial direction of the tool body 2 in relation to the pattern forming insert 30. In the illustrated embodiment, this adjustment means 50 has the form of an adjustment mechanism associated to the third insert seat 10c and by means of which the position of the calibrating insert 40 in the axial direction of the tool body 2 is adjustable. Thus, the exact positioning of the finishing insert 40 along the longitudinal axis 4 of the tool body 2 is adjustable by means of the adjustment mechanism 50.

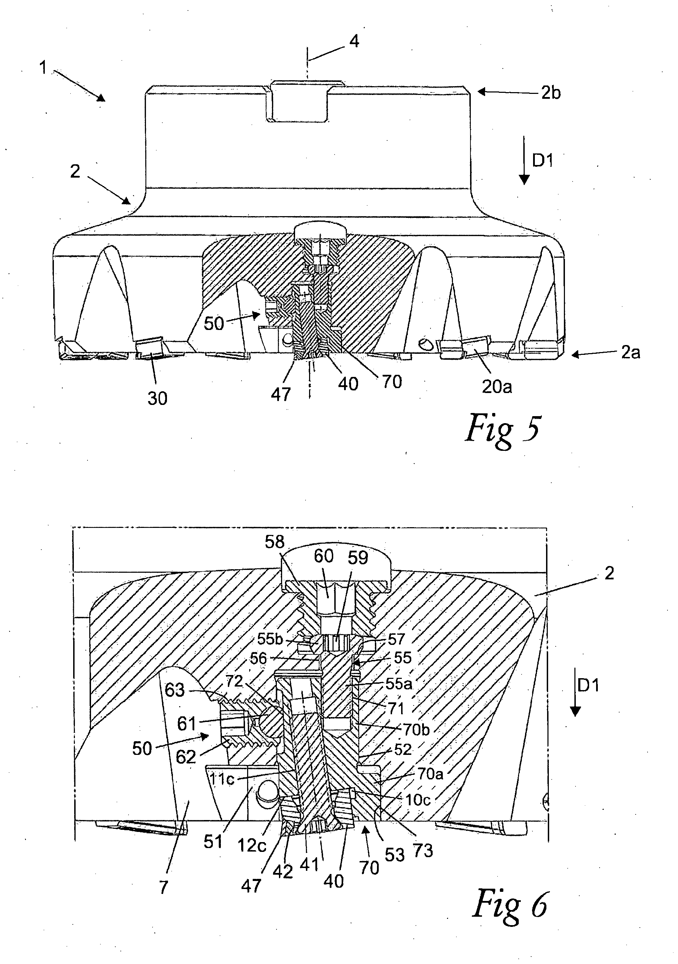

In the illustrated embodiment, the third insert seat 10c is arranged in a cassette 70, which is mounted in the tool body 2 and configured to support the calibrating insert 40. In this case, the position of the third insert seat 10c in the axial direction of the tool body 2, and thereby the position of the calibrating insert 40 in the axial direction of the tool body 2, is adjustable by adjustment of the position of the cassette 70 in the tool body 2 by means of the adjustment mechanism 50. In the illustrated example; the cassette 70 has a front part 70a that is received in a recess 51 in the tool body 2 and a rear part 70b that extends axially rearwardly from the front part 70a and is slidably received in a hole 52 in the tool body 2. The recess 51 is open towards the front end 2a of the tool body 2 and towards the periphery 6 of the tool body and the hole 52 extends from the recess 51 in parallel with the longitudinal axis 4 of the tool body 2 towards the rear end 2b of the tool body. A tangential abutment surface 73 (see Fig 6) is provided on the front part 70a of the cassette 70 and is configured to abut against a tangential support surface 53 in the recess 51. The front part 70a of the cassette 70 is also provided with a radial abutment surface, which is configured to abut against a radial support surface 54 in the recess 51.

In the illustrated example, the adjustment mechanism 50 comprises an adjustment member 55 in the form of a screw, which extends through a through hole 56 in the tool body 2. The adjustment member 55 comprises an elongated shaft 55a, which is provided with an external thread configured for engagement with a corresponding internal thread in a hole 71 in the rear part 70b of the cassette, and a head 55b, which is fixed to the shaft 55a and abuts against a shoulder 57 in the through hole 56. The adjustment member 55 is locked in axial position in the through hole 56 by means of a stop member 58 in the form of a screw, which is fixed in the through hole 56 and abuts against the head 55b of the adjustment member. The cassette 70 is moveable along the shaft 55a of the adjustment member 55 when the adjustment member is rotated. The head 55b of the adjustment member 55 is provided with a socket 59 designed for detachable engagement with a torque tool (not shown) to be used for rotating the adjustment member 55 when the axial position of the calibrating insert 40 is to be adjusted. The socket 59 is accessible from the outside of the tool body 2 via a through hole 60 in the stop member 58. The position of the cassette 70 in the axial direction of the tool body 2, and thereby the position of the calibrating insert 40 in the axial direction of the tool body 2, is adjustable by screwing the adjustment member 55 in either direction. In the illustrated example, the adjustment mechanism 50 also comprises a clamping member 61, by means of which the cassette 70 may be firmly clamped to the tool body 2 when the axial position of the cassette 70 has been set by means of the adjustment member 55. The clamping member 61 abuts against a lateral surface 72 on the rear part 70b of the cassette and can be forced against this lateral surface 72 by means of a locking screw 62 in order to firmly secure the rear part 70b of the cassette in the hole 52 by clamping. The locking screw 62 is received in a threaded hole 63 in the tool body 2.

The means 50 for adjustment of the axial position of the calibrating insert 40 in relation to the pattern forming insert 30 may of course also be designed in any other suitable manner.

In the illustrated embodiment, each primary cutting insert 20a-20g is releasably fixed to the associated first insert seat 10a by means of a fastening element 21 in the form of a screw, which extends through a through hole 22 in the primary cutting insert and is engaged in a threaded hole 11a (see Fig 2) in an axial support surface 12a in the first insert seat 10a. Each first insert seat 10a is also provided with a tangential support surface 13a and a radial support surface 14a for supporting a primary cutting insert 20a-20g when mounted in the first insert seat 10a.

In the illustrated embodiment, the pattern forming insert 30 is releasably fixed to the second insert seat 10b by means of a fastening element 31 in the form of a screw, which extends through a through hole 32 in the pattern forming insert 30 and is engaged in a threaded hole 11b in an axial support surface 12b in the second insert seat 10b. The second insert seat 10b is also provided with a tangential support surface 13b and a radial support surface 14b for supporting the pattern forming insert 30 when mounted in the second insert seat 10b.

In the illustrated embodiment, the calibrating insert 40 is releasably fixed to the third insert seat 10c by means of a fastening element 41 in the form of a screw, which extends through a through hole 42 in the calibrating insert 40 and is engaged in a threaded hole 11c in an axial support surface 12c in the third insert seat 10c. The third insert seat 10c is also provided with a tangential support surface 13c and a radial support surface 14c for supporting the calibrating insert 40 when mounted in the third insert seat 10c.

As an alternative to fastening elements 21, 31, 41 in the form of screws, the primary cutting inserts 20a-20g, the pattern forming insert 30 and the calibrating insert 40 may be configured to be releasably fixed to the associated insert seats 10a, 10b, 10c by means of suitable clamping means. As a further alternative, the primary cutting inserts 20a-20g and the pattern forming insert 30 may be brazed in the associated insert seats 10a and 10b, respectively, as described in EP 3 321 017 A1, at the same time as the calibrating insert 40 may be configured to be releasably or fixedly attached to the associated insert seat 10c.

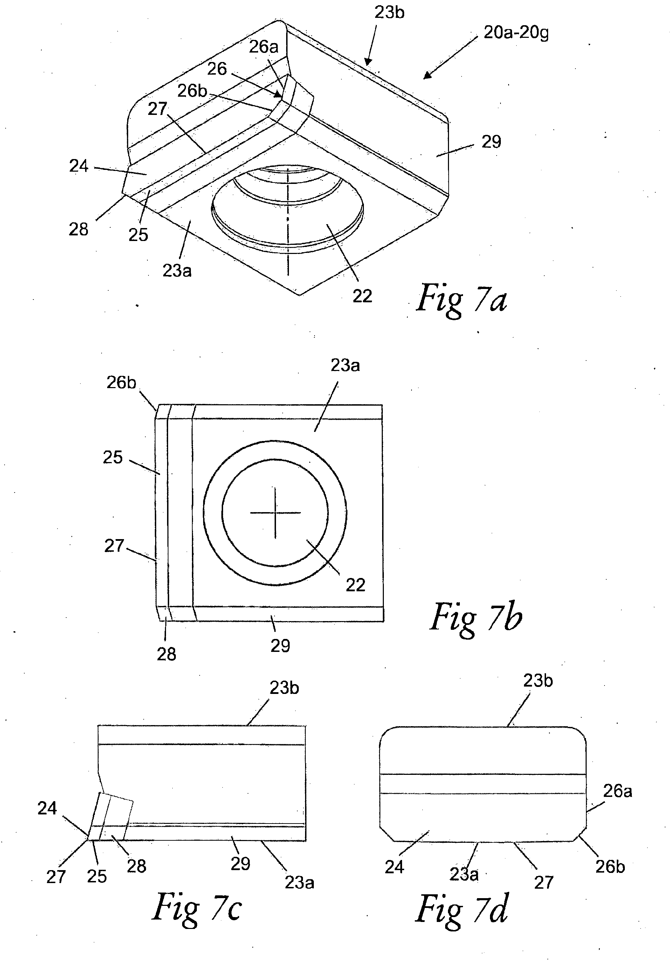

In the embodiment illustrated in Figs 1-5, the primary cutting inserts 20a-20g are all geometrically identical to each other, or at least substantially geometrically identical to each other. By substantially geometrically identical is meant geometrically identical within manufacturing tolerances. The primary cutting inserts 20a-20g illustrated in Figs 1-5 are of the type illustrated in closer detail in Figs 7a-7d but may of course also be designed in any other suitable manner. The primary cutting insert illustrated in Figs 7a-7d has a polygonal basic shape. The primary cutting insert comprises first and second major faces 23a, 23b arranged on opposite sides of the cutting insert and serving as top and bottom faces of the cutting insert. The primary cutting insert is provided with a through hole 22, which extends centrally through the cutting insert between the first and second major faces 23a, 23b. The primary cutting insert has a rake face 24 and a relief surface 25, wherein a main cutting edge 26 and a secondary cutting edge 27 are formed at an intersection between the rake face 24 and the relief surface 25. In the illustrated embodiment, the rake face 24, the relief surface 25 and the cutting edges 26, 27 form part of a PCD element 28 (PCD = polycrystalline diamond), which is brazed to a main body 29 of the primary cutting insert. However, the primary cutting insert may as an alternative be formed in one piece. The secondary cutting edge 27 is straight or slightly convex and is configured to extend essentially in a plane perpendicular to the longitudinal axis 4 of the tool body 2 when the primary cutting insert 20a-20g is mounted in the associated first insert seat 10a. The secondary cutting edge 27 constitutes the axially foremost cutting edge of the primary cutting insert 20a-20g, as seen in a reference direction D1 from the rear end 2b of the tool body towards the front end 2a of the tool body in parallel with the longitudinal axis 4 of the tool body. In the illustrated embodiment, the main cutting edge 26 comprises an essentially straight first part 26a, which is configured to extend essentially in parallel with the longitudinal axis 4 of the tool body 2 when the primary cutting insert 20a-20g is mounted in the associated first insert seat 10a, and an essentially straight second part 26b, which is inclined in relation to the first part 26a and extends between an end of the first part 26a and an end of the secondary cutting edge 27. In the illustrated embodiment, the relief surface 25 extends at an acute angle to the rake face 24, as illustrated in Fig 7c. Thus, the rake angle of the primary cutting insert is positive along the main and secondary cutting edges 26, 27.

When mounted in any of the first insert seats 10a, the primary cutting insert 20a-20g illustrated in Figs 7a-7d is so arranged that the second major face 23b of the primary cutting insert, or at least a portion thereof, abuts against the axial support surface 12a in the insert seat 10a in question and two side surfaces of the primary cutting insert, or at least a portion thereof, abut against a respective one of the tangential and radial support surfaces 13a, 14a in the insert seat 10a in question.

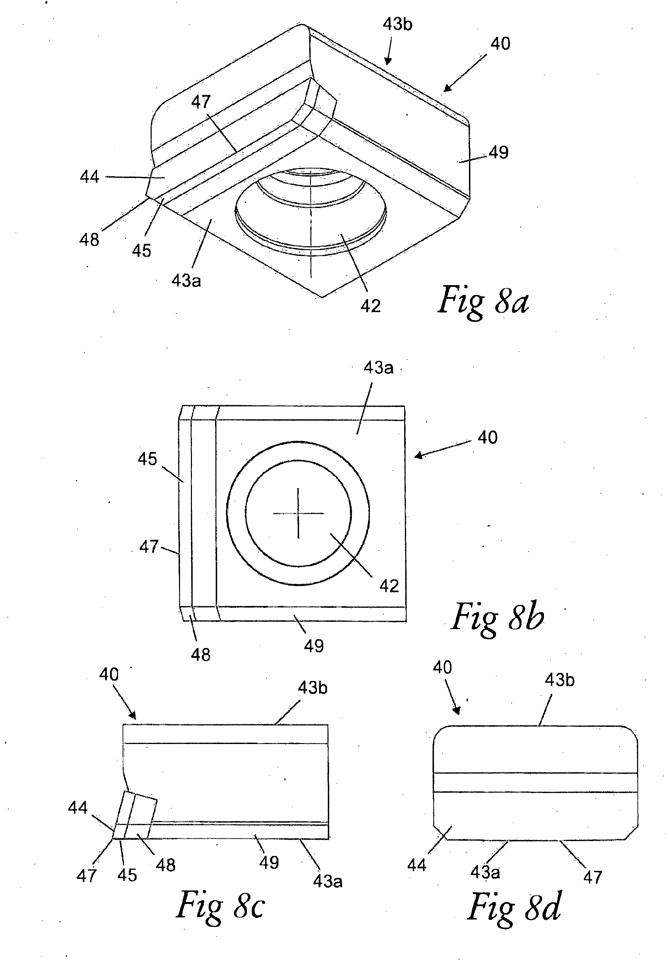

The calibrating insert 40 illustrated in Figs 1-5 is of the type illustrated in closer detail in Figs 8a-8d but may of course also be designed in any other suitable manner. The calibrating insert 40 illustrated in Figs 8a-8d has a polygonal basic shape. The calibrating insert 40 comprises first and second major faces 43a, 43b arranged on opposite sides of the calibrating insert and serving as top and bottom faces of the calibrating insert. The calibrating insert 40 is provided with a through hole 42, which extends centrally through the calibrating insert between the first and second major faces 43a, 43b. The calibrating insert 40 has a rake face 44 and a relief surface 45, wherein a calibrating cutting edge 47 is formed at an intersection between the rake face 44 and the relief surface 45. In the illustrated embodiment, the rake face 44, the relief surface 45 and the calibrating cutting edge 47 form part of a PCD element 48, which is brazed to a main body 49 of the calibrating insert. However, the calibrating insert 40 may as an alternative be formed in one piece. The calibrating cutting edge 47 is straight or slightly convex and is configured to extend essentially in a plane perpendicular to the longitudinal axis 4 of the tool body 2 when the calibrating insert 40 is mounted in the third insert seat 10c. The calibrating cutting edge 47 constitutes the axially foremost part of the calibrating insert 40, as seen in the above-mentioned reference direction D1. In the illustrated embodiment, the relief surface 45 extends at an acute angle to the rake face 44, as illustrated in Fig 8c. Thus, the rake angle of the calibrating insert 40 is positive along the calibrating cutting edge 47.

When mounted in any of the third insert seat 10c, the calibrating insert 40 illustrated in Figs 8a-8d is so arranged that the second major face 43b of the calibrating insert, or at least, a portion thereof, abuts against the axial support surface 12c in the third insert seat 10c and two side surfaces of the calibrating insert, or at least a portion thereof, abut against a respective one of the tangential and radial support surfaces 13c, 14c in the third insert seat 10c.

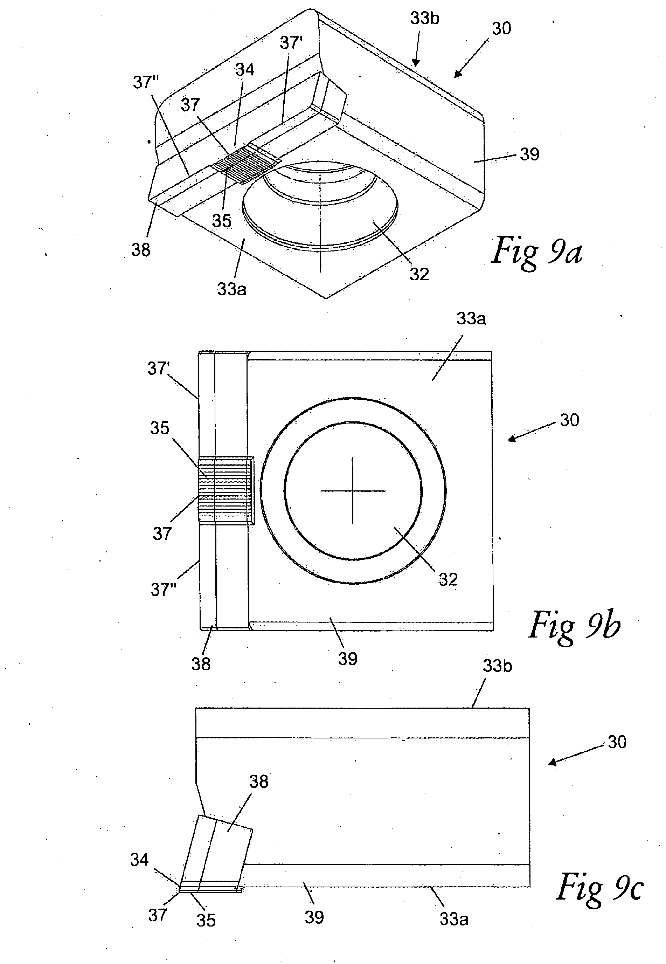

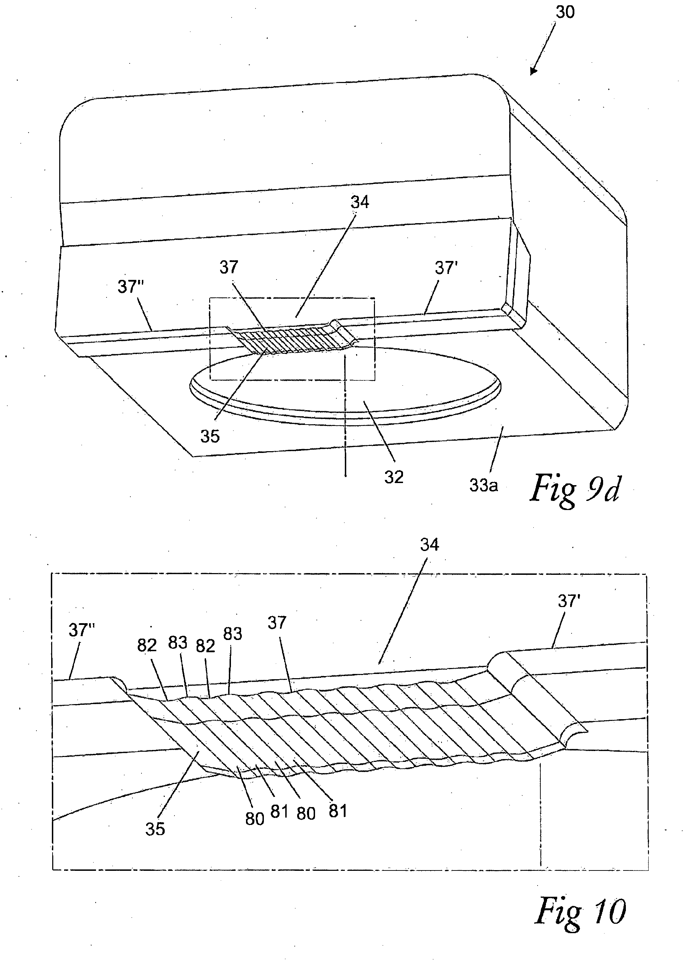

The pattern forming insert 30 illustrated in Figs 1-5 is of the type illustrated in closer detail in Figs 9a-9d but may of course also be designed in any other suitable manner. The pattern forming insert 30 illustrated in Figs 9a-9d has a polygonal basic shape. The pattern forming insert 30 comprises first and second major faces 33a, 33b arranged on opposite sides of the pattern forming insert and serving as top and bottom faces of the pattern forming insert. The pattern forming insert 30 is provided with a through hole 32, which extends centrally through the pattern forming insert between the first and second major faces 33a, 33b. The pattern forming insert 30 has a rake face 34 and a relief surface 35, wherein a pattern forming cutting edge 37 is formed at an intersection between the rake face 34 and the relief surface 35. In the illustrated embodiment, the rake face 34, the relief surface 35 and the pattern forming cutting edge 37 form part of a PCD element 38, which is brazed to a main body 39 of the pattern forming insert. However, the pattern forming insert 30 may as an alternative be formed in one piece. The pattern forming cutting edge 37 constitutes the axially foremost part of the pattern forming insert 30 as seen in the above-mentioned reference direction D1 and is located axially forwardly of the secondary cutting edge 27 of each primary cutting insert 20a-20g as seen in the reference direction D1. In the illustrated embodiment, the relief surface 35 extends at an acute angle to the rake face 34, as illustrated in Fig 9c. Thus, the rake angle of the pattern forming insert 30 is positive along the pattern forming cutting edge 37.

When mounted in the second insert seat 10b, the pattern forming insert 30 illustrated in Figs 9a-9d is so arranged that the second major face 33b of the pattern forming insert, or at least a portion thereof, abuts against the axial support surface 12b in the second insert seat 10b and two side surfaces of the pattern forming insert, or at least a portion thereof, abut against a respective one of the tangential and radial support surfaces 13b, 14b in the second insert seat 10b.

When mounted in the second insert seat 10b, the pattern forming insert 30 has such an axial position in the tool body 2 that the long edge parts 37', 37" to the right and to the left of the pattern forming cutting edge 37 are non-cutting, i.e. located axially rearwardly of the secondary cutting edge 27 of the axially foremost primary cutting insert 20g as seen in the reference direction D1. A first edge part 37' of the long edge parts 37', 37" is arranged at a larger radial distance from the longitudinal axis 4 of the tool body 2 than a second edge part 37" of the long edge parts 37', 37" when the pattern forming insert 30 is mounted in the second insert seat 10b. In the illustrated embodiment, the pattern forming cutting edge 37 is centrally positioned, such that the long edge parts 37', 37" are equally long. Thanks to this, the pattern forming insert 30 has an improved stability during a machining of a workpiece surface. However, the pattern forming cutting edge 37 may be positioned such that a length of the first edge part 37' of the long edge parts 37', 37" is smaller than a length of the second edge part 37" of the long edge parts 37', 37". In this way, it is possible to steer how big effective cutting diameter the tool has and/or to control whether or not the calibrating cutting edge 47 only cuts the summits 18 in the grooved pattern. The pattern forming cutting edge 37 may also be positioned such that a length of the first edge part 37' of the long edge parts 37', 37" is larger than a length of the second edge part 37" of the long edge parts 37', 37". In this way, it is possible to steer how big effective cutting diameter the tool has and to decrease a cutting velocity that the pattern forming cutting edge 37 is subject to without decreasing productivity of the tool. A decreased cutting velocity that the pattern forming cutting edge 37 is subject to would have beneficial effect on tool life of the pattern forming cutting edge 37. The radially outermost point of the pattern forming insert 30, i.e. the point of the pattern forming insert 30 that is located at the longest distance from the axis of rotation 3 of the tool body 2, is preferably arranged closer to the axis of rotation 3 than the first part 26a of the main cutting edge 26 of each primary cutting insert 20a-20g. In this way, the only edge of the pattern forming insert 30 that constitutes a cutting edge is the pattern forming cutting edge 37. Also the radially outermost point of the calibrating insert 40, i.e. the point of the calibrating insert 40 that is located at the longest distance from the axis of rotation 3 of the tool body 2, is preferably arranged closer to the axis of rotation 3 than the first part 26a of the main cutting edge 26 of each primary cutting insert 20a-20g.

A surface portion of the relief surface 35 that adjoins to the rake face 34 is wave-shaped with a periodic wave shape formed by a plurality of mutually parallel ridges 80 (see Fig 10) and intermediate valleys 81 that extend away from the rake face 34. The ridges 80 and valleys 81 on the relief surface 35 end in the rake face 34, which implies that the pattern forming cutting edge 37 is wave-shaped as seen in a direction towards the rake face 34, i.e. when looking towards the rake face 34, with a periodic wave shape corresponding to the wave shape of the relief surface 35. Thus, the pattern forming cutting edge 37 comprises a plurality of wave crests 82 and a wave trough 83 between every two consecutive wave crests. The number of ridges 80 on the relief surface 35, and consequently the number of wave crests 82 on the pattern forming cutting edge 37, is preferably three or more. In the illustrated embodiment, there are eight wave crests 82 equally spaced along the pattern forming cutting edge 37. The wave crests 82 on the pattern forming cutting edge 37 are jointly located in a first plane that extends perpendicularly to the longitudinal axis 4 of the tool body 2, whereas the wave troughs 83 on the pattern forming cutting edge 37 are jointly located in a second plane that is parallel to said first plane.

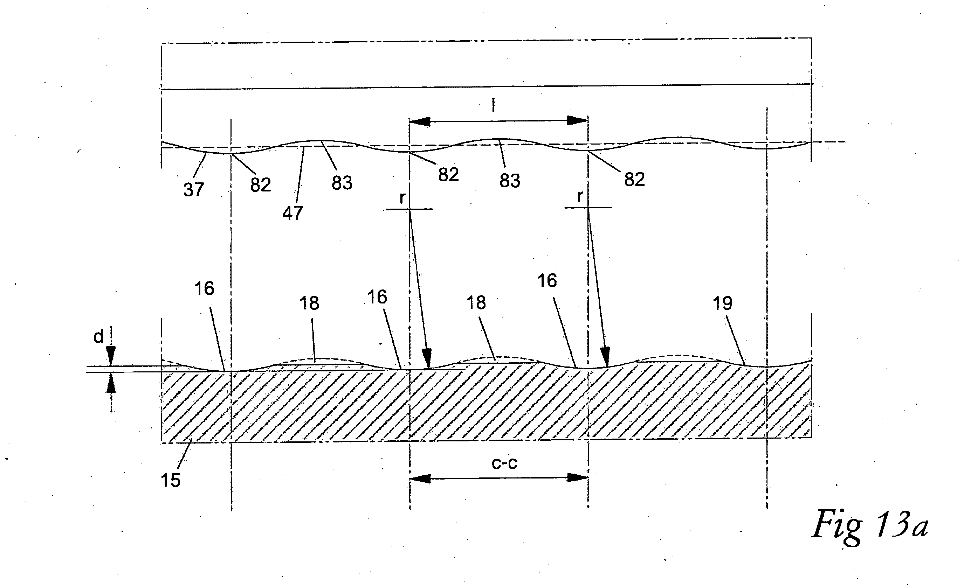

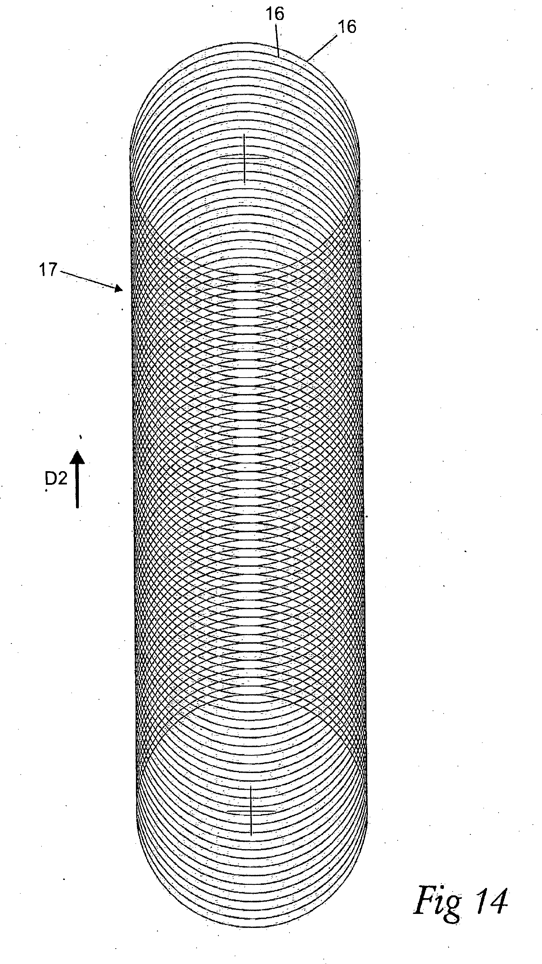

All wave crests 82 and wave troughs 83 on the pattern forming cutting edge 37 are located axially forwardly of the secondary cutting edge 27 of each primary cutting insert 20a-20g as seen in the above-mentioned reference direction D1. Thus, when the pattern forming insert 30 moves over a milled flat surface formed on a workpiece 15 (see Fig 13a) by the primary cutting inserts 20a-20g, the pattern forming cutting edge 37 will cut into the workpiece surface and form several mutually parallel and curved grooves 16 in the workpiece surface with a profile corresponding to the wave-shaped profile of the pattern forming cutting edge 37. By feeding the tool body 2 forwards along the workpiece surface with a suitable feed per revolution fₙ of the tool body 2 in a feeding direction D2 perpendicular to the longitudinal axis 4 of the tool body, the curved grooves 16 formed by the pattern forming cutting edge 37 in the workpiece surface during each new revolution of the tool body 2 will intersect curved grooves 16 formed by the pattern forming cutting edge 37 during previous revolutions of the tool body 2, and a mesh pattern 17 is thereby formed in the workpiece surface as the tool body is moved along the workpiece surface, as illustrated very schematically in Fig 14.

The wave-shaped surface portion of the relief surface 35 on the pattern forming insert 30 has the same profile, or at least substantially same profile, when seen in different mutually parallel sections perpendicular to the longitudinal direction of the ridges 80 on the relief surface.

The calibrating insert 40 has such an axial position in the tool body 2 that the calibrating cutting edge 47 is located axially between the wave crests 82 and the wave troughs 83 of the pattern forming cutting edge 37 as seen in the above-mentioned reference direction D1 (as schematically illustrated in Fig 13a), in order to allow the calibrating cutting edge 47 to cut summits in the grooved pattern formed on a workpiece surface 19 by the pattern forming cutting edge 37 and thereby achieve an adjustment of the surface roughness of the workpiece surface 19 machined by the face milling cutter1. Cut off parts of such summits 18 are schematically illustrated by broken lines in Fig 13a. By cutting the summits 18, the depth d of the grooves 16 in the machined workpiece surface 19 is reduced, which affects the achieved surface roughness of the mesh patterned workpiece surface. The surface roughness of the milled mesh patterned workpiece surface may consequently be adjusted as desired by adjustment of the axial position of the calibrating cutting edge 47 by means of the adjustment means 50. The radial position of the calibrating insert 40 in the tool body 2 is preferably such that the calibrating insert 40 will cut only the summits 18 in the grooved pattern formed by the pattern forming cutting edge 37 in the milled workpiece surface 19. However, it is also possible to arrange the calibrating insert 40 in such a position in the tool body 2 that the calibrating insert 40, while still having the calibrating cutting edge 47 located axially between the wave crests 82 and the wave troughs 83 of the pattern forming cutting edge 37 as seen in the above-mentioned reference direction D1, also will have a material removing function in the same manner as the primary cutting inserts 20a-20g in addition to the function of cutting the summits 18.

The length of the calibrating cutting edge 47 is preferably at least 1.5 or at least 2 or at least 2.5 or at least 3 times larger than the length of the pattern forming cutting edge 37. In the embodiment illustrated in Figs 1-5, the calibrating cutting edge 47 has the same length as the secondary cutting edge 27 provided on the primary cutting inserts 20a-20g. The calibrating insert 40 may also be of the same kind as the primary cutting inserts 20a-20g.

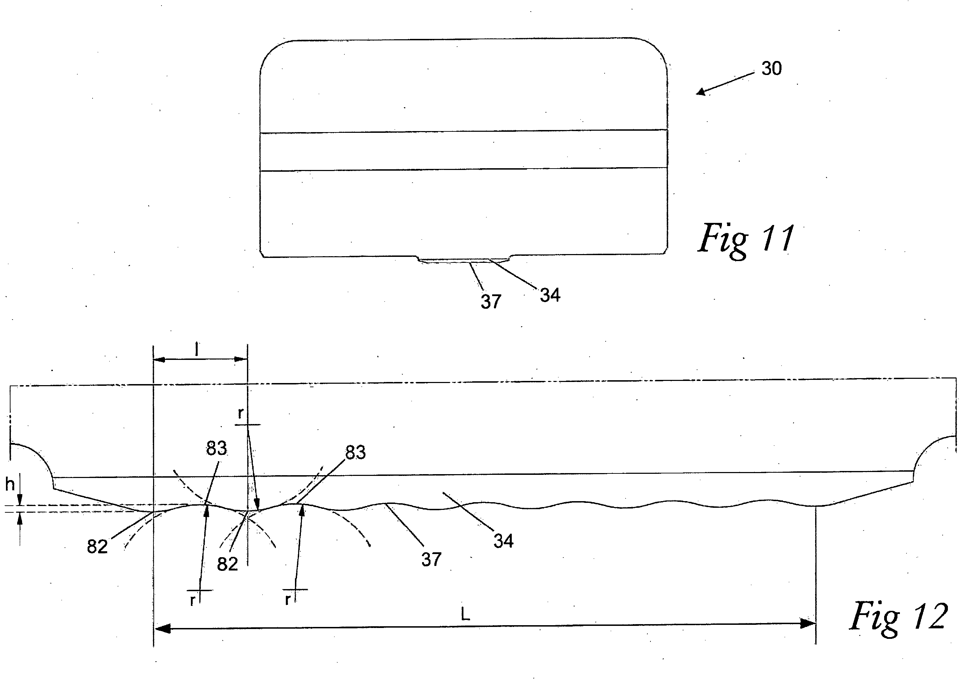

The height h (see Fig 12) of each wave crest 82 on the pattern forming cutting edge 37 is smaller than the linear distance I between every two consecutive wave crests 82, and preferably smaller than half this linear distance l, when seen in a plane perpendicular to the longitudinal direction of the ridges 80 on the relief surface 35. The height h of each wave crest 82 is 0.005-0.020 mm, preferably 0.010-0.020 mm, and more preferably 0,010-0.015 mm. The the linear distance I between every two consecutive wave crests 82 on the pattern forming cutting edge 37 is 0.10-0.30 mm, preferably 0.15-0.25 mm.

The pattern forming cutting edge 37 preferably has such a wave shape that each part of the pattern forming cutting edge 37 between two consecutive wave crests 82 converges continuously all the way towards the wave trough 83 between the two consecutive wave crests when moving in a direction opposite to the above-mentioned reference direction D1. This requirement is for instance fulfilled when the pattern forming cutting edge has a sinusoidal wave shape, as illustrated in Fig 12, or a triangular wave shape.

In the illustrated embodiment, each one of the ridges 80 and valleys 81 on the relief surface 35 has an arc-shaped profile with a radius of curvature r as seen in a section perpendicular to the longitudinal direction of the ridges 80. Said radius of curvature r is preferably smaller than or equal to the linear distance I between every two consecutive wave crests 82 on the pattern forming cutting edge 37.

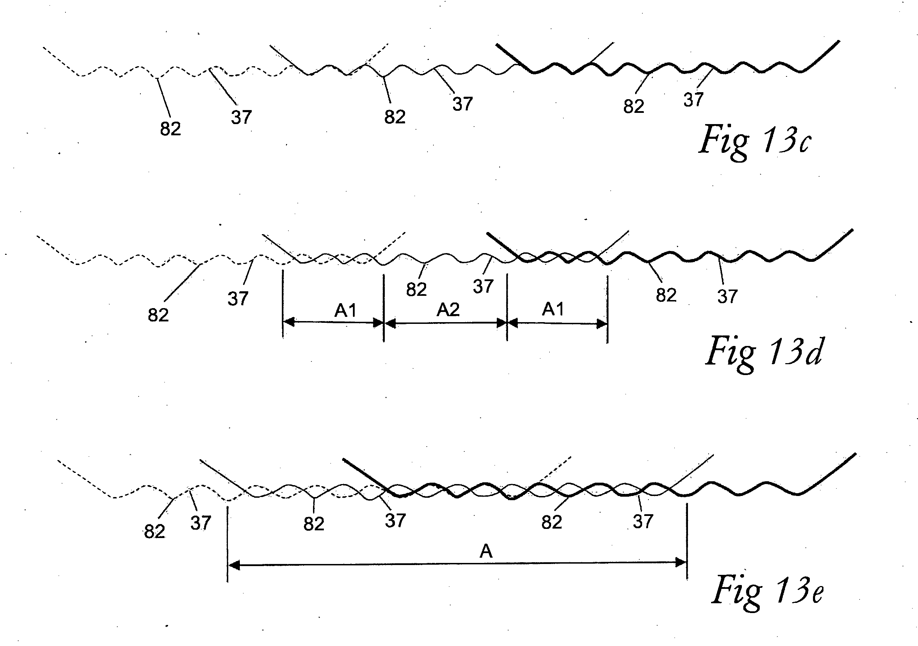

During machining of a workpiece surface, the face milling cutter 1 is to be moved along the workpiece surface with a feed per revolution fₙ of the tool body 2 in a feeding direction D2 perpendicular to the longitudinal axis 4 of the tool body suitably adapted to the wave shape of the pattern forming cutting edge 37. The feed per revolution fₙ of the tool body 2 in the feeding direction D2 may for instance be so chosen that the area on the workpiece surface machined by the pattern forming cutting edge 37 during each new revolution of the tool body 2 partly overlaps an area on the workpiece surface machined by the pattern forming cutting edge 37 during the immediately preceding revolution of the tool body 2, as seen in the feeding direction D2. This will give the possibility to create workpiece surfaces with different appearance and properties by small changes of feed per revolution fₙ. In those cases where fₙ =n₁·l and fₙ<L, where n₁ is an integer and L is the length of the pattern forming cutting edge 37, at least one of the wave crests 82 on the pattern forming cutting edge 37 will, during each new revolution of the tool body 2, move in respective at least one of the grooves 16 formed by the pattern forming cutting edge 37 in the workpiece surface 19 during one or more previous revolutions of the tool body 2, whereas other wave crests 82 on the pattern forming cutting edge 37 will create new grooves in the workpiece surface. In this case, the distance c-c between the centre lines of every two consecutive grooves in the workpiece surface, as seen in the feeding direction D2, is equal to the linear distance I between every two consecutive wave crests 82 on the pattern forming cutting edge 37. Fig 13c illustrates an example where fₙ=6·l and where the position of the pattern forming cutting edge 37 is shown during three consecutive revolutions of the tool body 2. The position of the pattern forming cutting edge 37 during a revolution n is shown with a dashed line, the position of the pattern forming cutting edge 37 during revolution n+1 is shown with a solid line, and the position of the pattern forming cutting edge 37 during revolution n+2 is shown with a fat solid line. In the example illustrated in Fig 13c, there are eight wave crests 82 equally spaced along the pattern forming cutting edge 37.

From the above described example where fₙ=n₁·l and fₙ<L, it can be understood that the face milling cutter according to the different embodiments presented in this application gives a possibility to vary feed per revolution fₙ to be able to adapt feed per tooth and optimize it for best tool life of the primary cutting inserts 20a-20g and the calibrating insert 40, with maintained condition of the final machined surface. Thanks to this, the diameter of the tool body 2 may be varied and even though the number of primary cutting inserts 20a-20g may vary greatly due to a variation of the diameter of the tool body 2, the most appropriate feed per tooth may be used or at least close to the most appropriate feed per tooth.

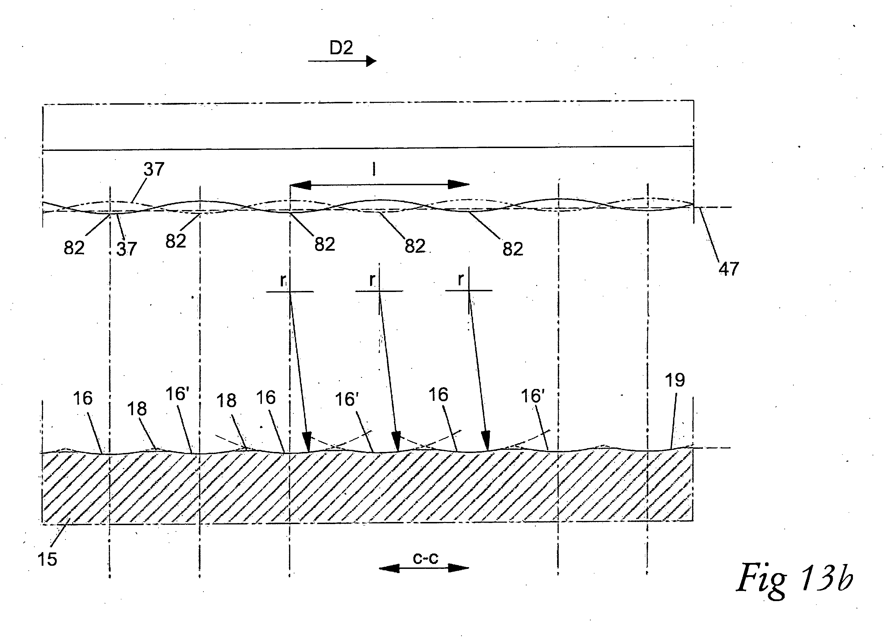

During each new revolution of the tool body 2, new grooves 16' (see Fig 13b) may be formed in a respective area between a pair of adjacent grooves 16 formed by the pattern forming cutting edge 37 in the workpiece surface 19 during one or more previous revolutions of the tool body 2, which implies that the distance c-c between the centre lines of every two consecutive grooves 16, 16' in the workpiece surface, as seen in the feeding direction D2, is smaller than the linear distance I between every two consecutive wave crests 82 on the pattern forming cutting edge 37. Also in this case, said feed per revolution fₙ of the tool body 2 in the feeding direction D2 is smaller than the length L of the pattern forming cutting edge 37 so that the area on the workpiece surface machined by the pattern forming cutting edge 37 during each new revolution of the tool body 2 partly overlaps an area on the workpiece surface machined by the pattern forming cutting edge 37 during the immediately preceding revolution of the tool body 2, as seen in the feeding direction D2.

For the sake of clarity, the pattern forming cutting edge 37 and the calibrating cutting edge 47 are in Figs 13a and 13b illustrated at a distance from the workpiece surface 19 machined by the pattern forming cutting edge 37 and the calibrating cutting edge 47. The position of the calibrating cutting edge 47 in relation to the profile forming cutting edge 37 in the axial direction of the tool body 2 is illustrated in dashed lines in Fig 13a and 13b. Furthermore, the respective position of the pattern forming cutting edge 37 during two consecutive revolutions of the tool body 2 are illustrated in continuous and dash-dotted lines in Fig 13b.

Fig 13d illustrates an example where fₙ=5.5·l and where the position of the pattern forming cutting edge 37 is shown during three consecutive revolutions of the tool body 2. The position of the pattern forming cutting edge 37 during a revolution n is shown with a dashed line, the position of the pattern forming cutting edge 37 during revolution n+1 is shown with a solid line, and the position of the pattern forming cutting edge 37 during revolution n+2 is shown with a fat solid line. In the example illustrated in Fig 13c, there are eight wave crests 82 equally spaced along the pattern forming cutting edge 37. The example illustrated in Fig 13d is one example when fₙ is a non-integer of the linear distance I between every two consecutive wave crests 82 on the pattern forming cutting edge 37 and 0.5·L<fₙ<L. In the areas A1, which are areas where a path of the pattern forming cutting edge 37 during one revolution of the tool body 2 overlaps the path of the pattern forming cutting edge 37 during the immediately preceding revolution of the tool body 2, as seen in the feeding direction D2, the distance c-c between the centre lines of every two consecutive grooves 16, 16' in the workpiece surface, as seen in the feeding direction D2, is smaller than the linear distance I between every two consecutive wave crests 82 on the pattern forming cutting edge 37. At the same time, in the areas A2, where there is no overlap between the path of the pattern forming cutting edge 37 during one revolution of the tool body 2 and the path of the pattern forming cutting edge 37 during the immediately preceding revolution of the tool body 2, the distance c-c between the centre lines of every two consecutive grooves is equal to the linear distance I between every two consecutive wave crests 82 on the pattern forming cutting edge 37. The areas on the workpiece surface that correspond to the areas A1 and A2, respectively, will have different visual appearance in addition to the different surface properties. This will enhance the appearance of a grid pattern that is often requested by end-users of machining tools. In these cases, i.e. where fₙ is a non-integer of the linear distance I between every two consecutive wave crests 82 on the pattern forming cutting edge 37 and 0.5·L<fₙ<L, the position of the calibrating insert 40 in relation to the pattern forming cutting edge 37 in the axial direction of the tool body 2 may be such that the calibrating cutting edge 47 cuts summits 18 between the grooves 16, 16' both in the areas A1 and A2, or such that the calibrating cutting edge 47 cuts summits 18 only in the areas A2 without cutting summits 18 in the areas A1. In the example illustrated in Fig 13d, the feed per revolution is fₙ=5.5·l, However, any other non-integer between 5 and 6 may be chosen. For instance, the feed per revolution fₙ may be 5.3·l or 5.7·l. Furthermore, the feed per revolution fₙ may be any non-integer that satisfies the requirement 0.5.L<fₙ<L. It can be understood that the face milling cutter according to the different embodiments presented in this application also when the feed per revolution fₙ is chosen in this way, gives a possibility to vary feed per revolution fₙ to be able to adapt feed per tooth and optimize it for best tool life of the primary cutting inserts 20a-20g and the calibrating insert 40, with maintained condition of the final machined surface, also because the width of areas A1 and A2 may be given different values. Thanks to this, the diameter of the tool body 2 may be varied and even though the number of primary cutting inserts 20a-20g may vary greatly due to a variation of the diameter of the tool body 2, the most appropriate feed per tooth may be used or at least close to the most appropriate feed per tooth.

Fig 13e illustrates an example where fₙ=2.5·l, and where the position of the pattern forming cutting edge 37 is shown during three consecutive revolutions of the tool body 2. The position of the pattern forming cutting edge 37 during a revolution n is shown with a dashed line, the position of the pattern forming cutting edge 37 during revolution n+1 is shown with a solid line, and the position of the pattern forming cutting edge 37 during revolution n+2 is shown with a fat solid line. In the example illustrated in Fig 13e, there are eight wave crests 82 equally spaced along the pattern forming cutting edge 37. The example illustrated in Fig 13e is one example when fₙ=l·(n₂+0.5), where n₂ is an integer larger than or equal to 0 and smaller that x-1, where x is the number of wave crests 82 on the pattern forming cutting edge 37. Thus, when the pattern forming cutting edge 37 has eight wave crests 82, as illustrated in Fig 13e, the integer n₂ may be any integer in the interval 0≤n₂<7. From the area A, it can be seen that a workpiece surface created in this way will have grooves arranged such that a distance c-c between the centre lines of every two consecutive grooves is equal to half the linear distance l between every two consecutive wave crests 82 on the pattern forming cutting edge 37. Since the revolutions n-1 and n+3 are not illustrated in Fig.13e, it seems that the areas to the left and to the right of the area A will have another nature. However, that is just because the revolutions n-1 and n+3 are not illustrated. The position of the calibrating cutting edge 47 is not illustrated in Fig 13e, but the calibrating cutting insert 40 has such an axial position in the tool body 2 that the calibrating cutting edge 47 cuts the summits between the grooves. In this way, a final surface on the workpiece is created where the distance between every two consecutive grooves is half the linear distance I between every two consecutive wave crests 82 on the pattern forming cutting edge 37. Such a final surface, if not created in this way, would require a pattern forming cutting edge where the linear distance between every two consecutive wave crests 82 on the pattern forming cutting edge 37 is l/2. Such an insert is more difficult to produce. Also in this case, the face milling cutter according to the different embodiments presented in this application gives a possibility to vary feed per revolution fₙ to be able to adapt feed per tooth and optimize it for best tool life of the primary cutting inserts 20a-20g and the calibrating insert 40, with maintained condition of the final machined surface. Thanks to this, the diameter of the tool body 2 may be varied and even though the number of primary cutting inserts 20a-20g may vary greatly due to a variation of the diameter of the tool body 2, the most appropriate feed per tooth may be used or at least close to the most appropriate feed per tooth.

The invention is of course not in any way restricted to the embodiments described above. On the contrary, many possibilities to modifications thereof will be apparent to a person with ordinary skill in the art without departing from the basic idea of the invention such as defined in the appended claims. For example, the face milling cutter may be provided with more than one pattern forming insert and more than one calibrating insert.

## Claims

1. A face milling cutter comprising:
- a tool body (2) having a front end (2a) and an opposite rear end (2b), the rear end (2b) being configured for attachment to a machine, wherein a longitudinal axis (4) of the tool body extends between the rear end (2b) and the front end (2a) of the tool body;
- at least two primary cutting inserts (20a-20g) for forming a milled flat surface on a workpiece;
- a pattern forming insert (30) for forming a grooved pattern in the milled flat surface formed by the primary cutting inserts (20a-20g); and
- several insert seats (10a, 10b, 10c) provided in the tool body (2) and distributed in the circumferential direction of the tool body, wherein these insert seats comprise:
• at least two first insert seats (10a) configured to accommodate a respective one of said at least two primary cutting inserts (20a-20g), and furthermore
• a second insert seat (10b) configured to accommodate the pattern forming insert (30),
wherein each primary cutting insert (20a-20g) of the at least two primary cutting inserts (20a-20g) has a cutting edge (27) that constitutes the axially foremost cutting edge of the primary cutting insert, as seen in a reference direction (D1) from the rear end (2b) of the tool body towards the front end (2a) of the tool body in parallel with the longitudinal axis (4) of the tool body, and
wherein the pattern forming insert (30) has a rake face (34), a relief surface (35) and a pattern forming cutting edge (37) formed at an intersection between the rake face and the relief surface, wherein the pattern forming cutting edge (37) constitutes the axially foremost cutting edge of the pattern forming insert (30) as seen in said reference direction (D1) and is located axially forwardly of the axially foremost cutting edge (27) of each primary cutting insert (20a-20g) as seen in said reference direction (D1),
**characterized in:**
- **that** at least a surface portion of the relief surface (35) that adjoins to the rake face (34) is wave-shaped with a periodic wave shape formed by a plurality of mutually parallel ridges (80) and intermediate valleys (81) extending away from the rake face (34), the pattern forming cutting edge (37) being wave-shaped as seen in a direction towards the rake face (34) with a periodic wave shape comprising a plurality of wave crests (82) and a wave trough (83) between every two consecutive wave crests of the plurality of wave crests (82), wherein a height (h) of each wave crest (82) of the plurality of wave crests (82) is smaller than a linear distance (l) between every two consecutive wave crests (82) of the plurality of wave crests, and wherein each wave trough (83) is located axially forwardly of the axially foremost cutting edge (27) of each primary cutting insert (20a-20g) of the at least two primary cutting inserts as seen in said reference direction (D1);
- **that** the face milling cutter (1) comprises a calibrating insert (40) for cutting summits in the grooved pattern formed by the pattern forming cutting edge (37) to thereby adjust the surface roughness of the workpiece surface machined by the face milling cutter (1);
- **that** said several insert seats (10a, 10b, 10c) furthermore comprise a third insert seat (10c) configured to accommodate the calibrating insert (40), wherein this third insert seat is arranged in the tool body directly before or directly after the second insert seat (10b) as seen in the intended direction of rotation (R) of the tool body; and
- **that** the calibrating insert (40) has a calibrating cutting edge (47) that is located axially between the plurality of wave crests (82) and each wave trough (83) of the pattern forming cutting edge (37) as seen in said reference direction (D1).

2. A face milling cutter according to claim 1, **characterized in that** the wave-shaped surface portion of the relief surface (35) has the same or substantially same profile when seen in different mutually parallel sections perpendicular to a longitudinal direction of the plurality of ridges (80) on the wave-shaped surface portion of the relief surface.

3. A face milling cutter according to claim 1 or 2, **characterized in that** the face milling cutter (1) comprises means (50) for adjustment of the position of the calibrating insert (40) in the axial direction of the tool body (2) in relation to the pattern forming insert (30).

4. A face milling cutter according to any of claims 1-3, **characterized in that** said plurality of wave crests (82) are at least three in number.

5. A face milling cutter according to any of claims 1-4, **characterized in that** the rake angle of the pattern forming insert (30) is positive along the pattern forming cutting edge (37).

6. A face milling cutter according to any of claims 1-5, **characterized in that** the length of the calibrating cutting edge (47) is at least 1.5 or at least 2 or at least 2.5 or at least 3 times larger than the length of the pattern forming cutting edge (37).

7. A face milling cutter according to any of claims 1-6, **characterized in that** the plurality of wave crests (82) are located in a first plane that extends perpendicularly to the longitudinal axis (4) of the tool body (2).

8. A face milling cutter according to any of claims 1-7, **characterized in that** the wave troughs (83) between the plurality of wave crests (82) are located in a second plane that extends perpendicularly to the longitudinal axis (4) of the tool body (2).

9. A face milling cutter according to any of claims 1-8, **characterized in that** each part of the pattern forming cutting edge (37) between two consecutive wave crests (82) converges continuously all the way towards the wave trough (83) between the two consecutive wave crests when moving in a direction opposite to the reference direction (D1).

10. A face milling cutter according to any of claims 1-9, **characterized in that** the pattern forming cutting edge (37) has a sinusoidal wave shape.

11. A. face milling cutter according to any of claims 1-10, **characterized in that** each one of the plurality of ridges (82) and each valley (83) on the wave-shaped surface portion of the relief surface (35) has a substantially arc-shaped profile with a radius of curvature (r) as seen in a section perpendicular to a longitudinal direction of the plurality of ridges (82).

12. A face milling cutter according to claim 11, **characterized in that** said radius of curvature (r) is smaller than or equal to the linear distance (l) between every two consecutive wave crests (82) of the plurality of wave crests.

13. A face milling cutter according to any of claims 1-9, **characterized in that** the pattern forming cutting edge (37) has an essentially triangular wave shape.

14. A face milling cutter according to any of claims 1-8, **characterized in that** the pattern forming cutting edge (37) has an essentially square wave shape.

15. A face milling cutter according to any of claims 1-14, **characterized in that** the height (h) of each wave crest (82) is 0.005-0.020 mm, preferably 0.010-0.020 mm, and more preferably 0,010-0.015 mm, when seen in a plane perpendicular to the longitudinal direction of the plurality of ridges (80) on the wave-shaped surface portion of the relief surface (35).

16. A face milling cutter according to any of claims 1-15, **characterized in that** the the height (h) of each wave crest (82) is smaller than half the linear distance (l) between every two consecutive wave crests.

17. A face milling cutter according to any of claims 1-16, **characterized in that** the the linear distance (l) between every two consecutive wave crests (82) is 0.10-0.30 mm, preferably 0.15-0.25 mm.

18. A face milling cutter according to any of claims 1-17, **characterized in that** the at least two primary cutting inserts (20a-20g) are staggered axially and radially.

19. A face milling cutter according to claim 2 and any of claims 3-17, **characterized in that** the pattern forming insert (30) is reground by surface grinding of the rake face (34) to create a new pattern forming cutting edge with the same profile as the pattern forming cutting edge (37).

20. A method for machining a surface on a workpiece by means of a face milling cutter (1) according to any of claims 1-19, **characterized in that** a relative movement between the face milling cutter (1) and the workpiece is effected such that the face milling cutter (1) is made to move along the workpiece surface with a feed per revolution fₙ of the tool body (2) in a feeding direction (D2) perpendicular to the longitudinal axis (4) of the tool body that is smaller than the length (L) of the pattern forming cutting edge (37), wherein the area on the workpiece surface machined by the pattern forming cutting edge (37) during each new revolution of the tool body (2) partly overlaps an area on the workpiece surface machined by the pattern forming cutting edge (37) during the immediately preceding revolution of the tool body (2), as seen in the feeding direction (D2).

21. A method according to claim 20, **characterized in that** some of the wave crests (82) on the pattern forming cutting edge (37) during each new revolution of the tool body (2) are moved in a curved path between a respective pair of adjacent curved grooves (16) formed by the pattern forming cutting edge (37) in the workpiece surface during one or more previous revolutions of the tool body (2).

22. A method according to claim 21, **characterized in that** the face milling cutter (1) is moved along the workpiece surface with a feed per revolution fₙ of the tool body (2) in said feeding direction (D2) so chosen:
- that fₙ=n₁·l and fₙ<L, where n₁ is an integer, I is the linear distance between every two consecutive wave crests (82) of the plurality of wave crests and L is the length of the pattern forming cutting edge (37); or
- that fₙ is a non-integer of the linear distance I between every two consecutive wave crests (82) of the plurality of wave crests and 0.5·L<fₙ<L, preferably 0.55·L<fₙ<0.95·L, more preferably 0.6·L<fₙ<0.9·L; or
- that fₙ=l·(n₂+0.5), where n₂ is an integer larger than or equal to 0 and smaller that x-1, where x is the number of the plurality of wave crests (82).

## Patentansprüche

1. Planfräser, der Folgendes aufweist:
- einen Werkzeugkörper (2) mit einem vorderen Ende (2a) und einem gegenüberliegenden hinteren Ende (2b), wobei das hintere Ende (2b) zur Anbringung an einer Maschine eingerichtet ist, wobei sich eine Längsachse (4) des Werkzeugkörpers zwischen dem hinteren Ende (2b) und dem vorderen Ende (2a) des Werkzeugkörpers erstreckt,
- wenigstens zwei primäre Schneideinsätze (20a-20g) zum Ausbilden einer gefrästen flachen Oberfläche auf einem Werkstück,
- einen musterbildenden Einsatz (30) zum Ausbilden eines Nut-Musters in der gefrästen flachen Oberfläche, die von den primären Schneideinsätzen (20a-20g) ausgebildet wird, und
- mehrere Einsatzsitze (10a, 10b, 10c), die in dem Werkzeugkörper (2) enthalten und in der Umfangsrichtung des Werkzeugkörpers verteilt sind, wobei diese Einsatzsitze Folgendes aufweisen:
• wenigstens zwei erste Einsatzsitze (10a), die so eingerichtet sind, dass sie einen jeweiligen der wenigstens zwei primären Schneideinsätze (20a-20g) aufnehmen, und darüber hinaus
• einen zweiten Einsatzsitz (10b), der so eingerichtet ist, dass er den musterbildenden Einsatz (30) aufnimmt,
wobei jeder primäre Schneideinsatz (20a-20g) der wenigstens zwei primären Schneideinsätze (20a-20g) eine Schneidkante (27) aufweist, die die axial vorderste Schneidkante des primären Schneideinsatzes bildet, gesehen in einer Bezugsrichtung (D1) vom hinteren Ende (2b) des Werkzeugkörpers zum vorderen Ende (2a) des Werkzeugkörpers parallel zur Längsachse (4) des Werkzeugkörpers, und wobei der musterbildende Einsatz (30) eine Spanfläche (34) aufweist, eine Freifläche (35) und eine musterbildende Schneidkante (37) aufweist, die an einem Übergang zwischen der Spanfläche und der Freifläche ausgebildet ist, wobei die musterbildende Schneidkante (37), in der Bezugsrichtung (D1) betrachtet, die axial vorderste Schneidkante des musterbildenden Einsatzes (30) bildet und, in der Bezugsrichtung (D1) betrachtet, axial vor der axial vordersten Schneidkante (27) eines jeden primären Schneideinsatzes (20a-20g) angeordnet ist,
**dadurch gekennzeichnet:**
- **dass** wenigstens ein Teil der Oberfläche der Freifläche (35), die an die Spanfläche (34) angrenzt, wellenförmig ist und eine periodische Wellenform aufweist, die durch eine Vielzahl von zueinander parallelen Erhöhungen (80) und dazwischenliegenden Tälern (81') ausgebildet ist, die sich von der Spanfläche (34) weg erstrecken, wobei die musterbildende Schneidkante (37), in Richtung der Spanfläche (34) betrachtet, wellenförmig ist mit einer periodischen Wellenform, die eine Mehrzahl von Wellenbergen (82) und ein Wellental (83) zwischen jeweils zwei aufeinanderfolgenden Wellenbergen der Mehrzahl von Wellenbergen (82) aufweist, wobei eine Höhe (h) jedes Wellenbergs (82) der Vielzahl von Wellenbergen (82) kleiner ist als ein linearer Abstand (l) zwischen jeweils zwei aufeinanderfolgenden Wellenbergen (82) der Vielzahl von Wellenbergen, und wobei jedes Wellental (83), in der Bezugsrichtung (D1) betrachtet, axial vor der axial vordersten Schneidkante (27) jedes primären Schneideinsatzes (20a-20g) der wenigstens zwei primären Schneideinsätze angeordnet ist,
- **dass** der Planfräser (1) einen Kalibrierungseinsatz (40) zum Schneiden von Erhebungen in dem von der musterbildenden Schneidkante (37) ausgebildeten Nut-Muster aufweist, um dadurch die Oberflächenrauheit der vom Planfräser (1) bearbeiteten Werkstückoberfläche einzustellen,
- **dass** die mehreren Einsatzsitze (10a, 10b, 10c) ferner einen dritten Einsatzsitz (10c) aufweisen, der so eingerichtet ist, dass er den Kalibrierungseinsatz (40) aufnimmt, wobei dieser dritte Einsatzsitz, in der beabsichtigten Rotationsrichtung (R) des Werkzeugkörpers betrachtet, direkt vor oder direkt nach dem zweiten Einsatzsitz (10b) im Werkzeugkörper angeordnet ist, und
- **dass** der Kalibriereinsatz (40) eine Kalibrierschneidkante (47) aufweist, die, in der Bezugsrichtung (D1) betrachtet, axial zwischen der Mehrzahl von Wellenbergen (82) und jedem Wellental (83) der musterbildenden Schneidkante (37) angeordnet ist.

2. Planfräser nach Anspruch 1, **dadurch gekennzeichnet, dass** der wellenförmige Oberflächenabschnitt der Freifläche (35) dasselbe oder im Wesentlichen dasselbe Profil aufweist, wenn man ihn in verschiedenen zueinander parallelen Abschnitten senkrecht zu einer Längsrichtung der Vielzahl von Erhöhungen (80) auf dem wellenförmigen Oberflächenabschnitt der Freifläche betrachtet.

3. Planfräser nach Anspruch 1 oder 2, **dadurch gekennzeichnet, dass** der Planfräser (1) Mittel (50) zum Einstellen der Position des Kalibriereinsatzes (40) in axialer Richtung des Werkzeugkörpers (2) in Bezug auf den musterbildenden Einsatz (30) aufweist.

4. Planfräser nach einem der Ansprüche 1 bis 3, **dadurch gekennzeichnet, daß** die Anzahl der Wellenberge (82) wenigstens drei beträgt.

5. Planfräser nach einem der Ansprüche 1-4, **dadurch gekennzeichnet, daß** der Spanwinkel des musterbildenden Einsatzes (30) entlang der musterbildenden Schneidkante (37) positiv ist.

6. Planfräser nach einem der Ansprüche 1-5, **dadurch gekennzeichnet, daß** die Länge der Kalibrierschneidkante (47) mindestens 1,5 oder mindestens 2 oder mindestens 2,5 oder mindestens 3 mal größer ist als die Länge der musterbildenden Schneidkante (37).

7. Planfräser nach einem der Ansprüche 1 bis 6, **dadurch gekennzeichnet, daß** die mehreren Wellenberge (82) in einer ersten Ebene liegen, die senkrecht zur Längsachse (4) des Werkzeugkörpers (2) verläuft.

8. Planfräser nach einem der Ansprüche 1-7, **dadurch gekennzeichnet, dass** die Wellentäler (83) zwischen den mehreren Wellenbergen (82) in einer zweiten Ebene liegen, die sich senkrecht zur Längsachse (4) des Werkzeugkörpers (2) erstreckt.

9. Planfräser nach einem der Ansprüche 1 bis 8, **dadurch gekennzeichnet, dass** jeder Teil der musterbildenden Schneidkante (37) zwischen zwei aufeinanderfolgenden Wellenbergen (82) den ganzen Weg zum Wellental (83) zwischen den beiden aufeinanderfolgenden Wellenbergen kontinuierlich konvergiert, wenn man sich in einer Richtung entgegengesetzt zur Bezugsrichtung (D1) bewegt.

10. Planfräser nach einem der Ansprüche 1-9, **dadurch gekennzeichnet, dass** die musterbildende Schneidkante (37) eine sinusförmige Wellenform aufweist.

11. Planfräser nach einem der Ansprüche 1-10, **dadurch gekennzeichnet, dass** jede der mehreren Erhöhungen (82) und jedes Tal (83) auf dem wellenförmigen Oberflächenabschnitt der Freifläche (35) ein im Wesentlichen bogenförmiges Profil mit einem Krümmungsradius (r) aufweist, gesehen in einem Schnitt senkrecht zu einer Längsrichtung der mehreren Erhöhungen (82).

12. Planfräser nach Anspruch 11, **dadurch gekennzeichnet, dass** der Krümmungsradius (r) kleiner als oder gleich dem linearen Abstand (l) zwischen jeweils zwei aufeinanderfolgenden Wellenbergen (82) der Vielzahl von Wellenbergen ist.

13. Planfräser nach einem der Ansprüche 1-9, **dadurch gekennzeichnet, daß** die musterbildende Schneidkante (37) eine im Wesentlichen dreieckige Wellenform aufweist.

14. Planfräser nach einem der Ansprüche 1-8, **dadurch gekennzeichnet, daß** die musterbildende Schneidkante (37) eine im Wesentlichen quadratische Wellenform aufweist.

15. Planfräser nach einem der Ansprüche 1 bis 14, **dadurch gekennzeichnet, daß** die Höhe (h) jedes Wellenbergs (82) in einer Ebene senkrecht zur Längsrichtung der Vielzahl von Erhöhungen (80) auf dem wellenförmigen Oberflächenabschnitt der Freifläche (35) betrachtet, 0,005 bis 0,020 mm, vorzugsweise 0,010 bis 0,020 mm und noch bevorzugter 0,010 bis 0,015 mm beträgt.

16. Planfräser nach einem der Ansprüche 1 bis 15, **dadurch gekennzeichnet, dass** die Höhe (h) jedes Wellenbergs (82) kleiner ist als die Hälfte des linearen Abstands (l) zwischen jeweils zwei aufeinanderfolgenden Wellenbergen.

17. Planfräser nach einem der Ansprüche 1-16, **dadurch gekennzeichnet, dass** der lineare Abstand (l) zwischen jeweils zwei aufeinanderfolgenden Wellenbergen (82) 0,10-0,30 mm, vorzugsweise 0,15-0,25 mm, beträgt.

18. Planfräser nach einem der Ansprüche 1-17, **dadurch gekennzeichnet, dass** die wenigstens zwei primären Schneideinsätze (20a-20g) axial und radial versetzt angeordnet sind.

19. Planfräser nach Anspruch 2 und einem der Ansprüche 3 bis 17, **dadurch gekennzeichnet, dass** der musterbildende Einsatz (30) durch Flachschleifen der Spanfläche (34) nachgeschliffen wird, um eine neue musterbildende Schneidkante mit demselben Profil wie die musterbildende Schneidkante (37) zu erzeugen.

20. Verfahren zum Bearbeiten einer Fläche auf einem Werkstück mittels eines Planfräsers (1) nach einem der Ansprüche 1 bis 19, **dadurch gekennzeichnet, dass** eine Relativbewegung zwischen dem Planfräser (1) und dem Werkstück derart erfolgt, dass der Planfräser (1) dazu gebracht wird, sich in einer Vorschubrichtung (D2) senkrecht zur Längsachse (4) des Werkzeugkörpers entlang der Werkstückfläche mit einem Vorschub pro Umdrehung fn des Werkzeugkörpers (2) zu bewegen, die kleiner ist als die Länge (L) der musterbildenden Schneidkante (37), wobei der von der musterbildenden Schneidkante (37) bei jeder neuen Umdrehung des Werkzeugkörpers (2) bearbeitete Bereich auf der Werkstückoberfläche einen von der musterbildenden Schneidkante (37) bei der unmittelbar vorhergehenden Umdrehung des Werkzeugkörpers (2) bearbeiteten Bereich in Vorschubrichtung (D2) gesehen teilweise überlappt.

21. Verfahren nach Anspruch 20, **dadurch gekennzeichnet, dass** einige der Wellenberge (82) auf der musterbildenden Schneidkante (37) während jeder neuen Umdrehung des Werkzeugkörpers (2) in einer gekrümmten Bewegungsbahn zwischen einem jeweiligen Paar benachbarter gekrümmter Nuten (16) bewegt werden, die von der musterbildenden Schneidkante (37) in der Werkstückoberfläche während einer oder mehrerer vorheriger Umdrehungen des Werkzeugkörpers (2) ausgebildet wurden.

22. Verfahren nach Anspruch 21, **dadurch gekennzeichnet, dass** der Planfräser (1) in der Vorschubrichtung (D2) entlang der Werkstückoberfläche mit einem Vorschub pro Umdrehung fn des Werkzeugkörpers (2) bewegt wird, der so gewählt ist
- daß fn=n1·l und fn<L ist, wobei n1 eine ganze Zahl ist, I der lineare Abstand zwischen jeweils zwei aufeinanderfolgenden Wellenbergen (82) der Vielzahl von Wellenbergen und L die Länge der das Muster ausbildenden Schneidkante (37) ist, oder
- daß fn eine Nicht-Ganzzahl des linearen Abstandes I zwischen jeweils zwei aufeinanderfolgenden Wellenbergen (82) der Vielzahl von Wellenbergen ist und 0,5·L<fn<L, vorzugsweise 0,55·L<fn<0,95 L, noch bevorzugter 0,6·L<fn<0,9 L, oder daß fn=l (n2+0,5) ist, wobei n2 eine Ganzzahl größer oder gleich 0 und kleiner als x-1 ist, wobei x die Anzahl der Vielzahl von Wellenbergen (82) ist.

## Revendications

1. Fraise à surfacer comprenant :
- un corps d'outil (2) présentant une extrémité avant (2a) et une extrémité arrière opposée (2b), l'extrémité arrière (2b) étant configurée pour être attachée à une machine, où un axe longitudinal (4) du corps d'outil s'étend entre l'extrémité arrière (2b) et l'extrémité avant (2a) du corps d'outil ;
- au moins deux plaquettes de coupe principales (20a-20g) destinées à former une surface plane fraisée sur une pièce à usiner ;
- une plaquette de formation de motif (30) destinée à former un motif rainuré dans la surface plane fraisée formée par les plaquettes de coupe principales (20a-20g) ; et
- plusieurs sièges de plaquette (10a, 10b, 10c) ménagés dans le corps d'outil (2) et répartis dans la direction circonférentielle du corps d'outil, où ces sièges de plaquette comprennent :
• au moins deux premiers sièges de plaquette (10a) configurés pour recevoir une plaquette respective parmi lesdites au moins deux plaquettes de coupe principales (20a-20g), et en outre
• un deuxième siège de plaquette (10b) configuré pour recevoir la plaquette de formation de motif (30),
où chaque plaquette de coupe principale (20a-20g) des au moins deux plaquettes de coupe principales (20a-20g) présente une arête de coupe (27) qui constitue l'arête de coupe la plus à l'avant axialement de la plaquette de coupe principale, selon une vue d'observation suivant une direction de référence (D1) allant de l'extrémité arrière (2b) du corps d'outil vers l'extrémité avant (2a) du corps d'outil parallèle à l'axe longitudinal (4) du corps d'outil, et
où la plaquette de formation de motif (30) présente une face d'attaque (34), une surface de dépouille (35) et une arête de coupe de formation de motif (37) formée à une intersection entre la face d'attaque et la surface de dépouille, où l'arête de coupe de formation de motif (37) constitue l'arête de coupe la plus à l'avant axialement de la plaquette de formation de motif (30) selon une vue d'observation suivant ladite direction de référence (D1) et est située axialement à l'avant de l'arête de coupe la plus à l'avant axialement (27) de chaque plaquette de coupe principale (20a-20g) selon une vue d'observation suivant ladite direction de référence (D1),
**caractérisée en ce :**
- **qu'**au moins une partie de surface de la surface de dépouille (35) qui est contiguë à la face d'attaque (34) est en forme d'onde avec une forme d'onde périodique formée par une pluralité de nervures mutuellement parallèles (80) et de vallées intermédiaires (81) s'étendant vers l'opposé de la face d'attaque (34), l'arête de coupe de formation de motif (37) étant en forme d'onde selon une vue d'observation suivant une direction vers la face d'attaque (34) avec une forme d'onde périodique comprenant une pluralité de crêtes d'onde (82) et un creux d'onde (83) entre toutes les deux crêtes d'onde consécutives de la pluralité de crêtes d'onde (82), où une hauteur (h) de chaque crête d'onde (82) de la pluralité de crêtes d'onde (82) est inférieure à une distance linéaire (l) entre toutes les deux crêtes d'onde consécutives (82) de la pluralité de crêtes d'onde, et où chaque creux d'onde (83) est situé axialement à l'avant de l'arête de coupe la plus à l'avant axialement (27) de chaque plaquette de coupe principale (20a-20g) des au moins deux plaquettes de coupe principales selon une vue d'observation suivant ladite direction de référence (D1) ;
- **que** la fraise à surfacer (1) comprend une plaquette de calibrage (40) destinée à découper des sommets dans le motif rainuré formé par l'arête de coupe de formation de motif (37) pour ajuster ainsi la rugosité de surface de la surface de la pièce à usiner usinée par la fraise à surfacer (1) ;
- **que** lesdits plusieurs sièges de plaquette (10a, 10b, 10c) comprennent en outre un troisième siège de plaquette (10c) configuré pour recevoir la plaquette de calibrage (40), où ce troisième siège de plaquette est agencé dans le corps d'outil juste avant ou juste après le deuxième siège de plaquette (10b) selon une vue d'observation suivant le sens de rotation (R) prévu du corps d'outil ; et
- **que** la plaquette de calibrage (40) présente une arête de coupe de calibrage (47) qui est située axialement entre la pluralité de crêtes d'onde (82) et chaque creux d'onde (83) de l'arête de coupe de formation de motif (37) selon une vue d'observation suivant ladite direction de référence (D1).

2. Fraise à surfacer selon la revendication 1, **caractérisée en ce que** la partie de surface en forme d'onde de la surface de dépouille (35) présente le même profil ou sensiblement le même profil selon une vue d'observation dans différentes sections mutuellement parallèles perpendiculaires à une direction longitudinale de la pluralité de nervures (80) sur la partie de surface en forme d'onde de la surface de dépouille.

3. Fraise à surfacer selon la revendication 1 ou 2, **caractérisée en ce que** la fraise à surfacer (1) comprend un moyen (50) destiné au réglage de la position de la plaquette de calibrage (40) dans la direction axiale du corps d'outil (2) par rapport à la plaquette de formation de motif (30).

4. Fraise à surfacer selon l'une quelconque des revendications 1 à 3, **caractérisée en ce que** ladite pluralité de crêtes d'onde (82) sont au moins au nombre de trois.

5. Fraise à surfacer selon l'une quelconque des revendications 1 à 4, **caractérisée en ce que** l'angle d'attaque de la plaquette de formation de motif (30) est positif le long de l'arête de coupe de formation de motif (37).

6. Fraise à surfacer selon l'une quelconque des revendications 1 à 5, **caractérisée en ce que** la longueur de l'arête de coupe de calibrage (47) est au moins 1,5 ou au moins 2 ou au moins 2,5 ou au moins 3 fois plus importante que la longueur de l'arête de coupe de formation de motif (37).

7. Fraise à surfacer selon l'une quelconque des revendications 1 à 6, **caractérisée en ce que** la pluralité de crêtes d'onde (82) sont situées dans un premier plan qui s'étend perpendiculairement à l'axe longitudinal (4) du corps d'outil (2).

8. Fraise à surfacer selon l'une quelconque des revendications 1 à 7, **caractérisée en ce que** les creux d'onde (83) entre la pluralité de crêtes d'onde (82) sont situés dans un second plan qui s'étend perpendiculairement à l'axe longitudinal (4) du corps d'outil (2).

9. Fraise à surfacer selon l'une quelconque des revendications 1 à 8, **caractérisée en ce que** chaque partie de l'arête de coupe de formation de motif (37) entre deux crêtes d'onde consécutives (82) converge régulièrement tout du long vers le creux d'onde (83) entre les deux crêtes d'onde consécutives en allant dans une direction opposée à la direction de référence (D1).

10. Fraise à surfacer selon l'une quelconque des revendications 1 à 9, **caractérisée en ce que** l'arête de coupe de formation de motif (37) présente une forme d'onde sinusoïdale.

11. Fraise à surfacer selon l'une quelconque des revendications 1 à 10, **caractérisée en ce que** chaque nervure de la pluralité de nervures (82) et chaque vallée (83) sur la partie de surface en forme d'onde de la surface de dépouille (35) présentent un profil sensiblement en forme d'arc avec un rayon de courbure (r) selon une vue d'observation dans une section perpendiculaire à une direction longitudinale de la pluralité de nervures (82).

12. Fraise à surfacer selon la revendication 11, **caractérisée en ce que** ledit rayon de courbure (r) est inférieur ou égal à la distance linéaire (l) entre toutes les deux crêtes d'onde consécutives (82) de la pluralité de crêtes d'onde.

13. Fraise à surfacer selon l'une quelconque des revendications 1 à 9, **caractérisée en ce que** l'arête de coupe de formation de motif (37) présente une forme d'onde sensiblement triangulaire.

14. Fraise à surfacer selon l'une quelconque des revendications 1 à 8, **caractérisée en ce que** l'arête de coupe de formation de motif (37) présente une forme d'onde sensiblement carrée.

15. Fraise à surfacer selon l'une quelconque des revendications 1 à 14, **caractérisée en ce que** la hauteur (h) de chaque crête d'onde (82) va de 0,005 à 0,020 mm, de préférence de 0,010 à 0,020 mm, et de façon davantage préférée de 0,010 à 0,015 mm, selon une vue d'observation dans un plan perpendiculaire à la direction longitudinale de la pluralité de nervures (80) sur la partie de surface en forme d'onde de la surface de dépouille (35).

16. Fraise à surfacer selon l'une quelconque des revendications 1 à 15, **caractérisée en ce que** la hauteur (h) de chaque crête d'onde (82) est inférieure à la moitié de la distance linéaire (l) entre toutes les deux crêtes d'onde consécutives.

17. Fraise à surfacer selon l'une quelconque des revendications 1 à 16, **caractérisée en ce que** la distance linéaire (l) entre toutes les deux crêtes d'onde consécutives (82) va de 0,10 à 0,30 mm, de préférence de 0,15 à 0,25 mm.

18. Fraise à surfacer selon l'une quelconque des revendications 1 à 17, **caractérisée en ce que** les au moins deux plaquettes de coupe principales (20a-20g) sont décalées axialement et radialement.

19. Fraise à surfacer selon la revendication 2 et l'une quelconque des revendications 3 à 17, **caractérisée en ce que** la plaquette de formation de motif (30) est réaffûtée par meulage de surface de la face d'attaque (34) pour créer une nouvelle arête de coupe de formation de motif ayant le même profil que l'arête de coupe de formation de motif (37).

20. Procédé d'usinage d'une surface sur une pièce à usiner au moyen d'une fraise à surfacer (1) selon l'une quelconque des revendications 1 à 19, **caractérisé en ce qu'**un déplacement relatif entre la fraise à surfacer (1) et la pièce à usiner est effectué de telle sorte que la fraise à surfacer (1) est amenée à se déplacer le long de la surface de la pièce à usiner avec une avance par révolution fₙ du corps d'outil (2) suivant une direction d'avance (D2) perpendiculaire à l'axe longitudinal (4) du corps d'outil qui est inférieure à la longueur (L) de l'arête de coupe de formation de motif (37), où la zone sur la surface de la pièce à usiner usinée par l'arête de coupe de formation de motif (37) durant chaque nouvelle révolution du corps d'outil (2) chevauche partiellement une zone sur la surface de la pièce à usiner usinée par l'arête de coupe de formation de motif (37) durant la révolution immédiatement précédente du corps d'outil (2), selon une vue d'observation suivant la direction d'avance (D2).

21. Procédé selon la revendication 20, **caractérisé en ce que** certaines des crêtes d'onde (82) sur l'arête de coupe de formation de motif (37) durant chaque nouvelle révolution du corps d'outil (2) sont déplacées sur une trajectoire incurvée entre une paire respective de rainures incurvées adjacentes (16) formées par l'arête de coupe de formation de motif (37) dans la surface de la pièce à usiner durant une ou plusieurs révolutions précédentes du corps d'outil (2).

22. Procédé selon la revendication 21, **caractérisé en ce que** la fraise à surfacer (1) est déplacée le long de la surface de la pièce à usiner avec une avance par révolution fₙ du corps d'outil (2) dans ladite direction d'avance (D2) choisie de sorte :
- que fₙ = n₁ · l et fₙ < L, où n₁ est un entier, 1 est la distance linéaire entre toutes les deux crêtes d'onde consécutives (82) de la pluralité de crêtes d'onde et L est la longueur de l'arête de coupe de formation de motif (37) ; ou
- que fₙ est un non entier de la distance linéaire 1 entre toutes les deux crêtes d'onde consécutives (82) de la pluralité de crêtes d'onde et 0,5 · L < fₙ < L, de préférence 0,55 · L < fₙ < 0,95 · L, de façon davantage préférée 0,6 · L < fₙ < 0,9 · L ; ou
- que fₙ = l · (n₂ + 0,5), où n₂ est un entier supérieur ou égal à 0 et inférieur à x - 1, où x est le nombre de crêtes de la pluralité de crêtes d'onde (82).
